**Europäisches Patentamt**

(19) **European Patent Office**

**Office européen des brevets**

(11) Veröffentlichungsnummer : **0 214 990**
**B1**

(12) # EUROPÄISCHE PATENTSCHRIFT

(45) Veröffentlichungstag der Patentschrift :
30.08.89

(51) Int. Cl.⁴ : **B 62 D 33/00**, B 60 G 25/00

(21) Anmeldenummer : 85903263.3

(22) Anmeldetag : 26.06.85

(86) Internationale Anmeldenummer :
PCT/EP 85/00311

(87) Internationale Veröffentlichungsnummer :
WO/8600270 (16.01.86 Gazette 86/02)

(54) MEHRACHSIGES KRAFTFAHRZEUG MIT EINEM AUFBAU.

(30) Priorität : 26.06.84 DE 3423545
06.08.84 DE 8423371 U
08.10.84 DE 8429553 U

(43) Veröffentlichungstag der Anmeldung :
25.03.87 Patentblatt 87/13

(45) Bekanntmachung des Hinweises auf die Patenterteilung : 30.08.89 Patentblatt 89/35

(84) Benannte Vertragsstaaten :
AT DE FR GB IT SE

(56) Entgegenhaltungen :
EP--A-- 0 016 469
DE--A-- 2 201 339
DE--A-- 2 949 232
DE--B-- 1 290 831
FR--A-- 2 393 714
FR--A-- 2 523 539
GB--A-- 1 511 140

(73) Patentinhaber : **MATRA-WERKE GMBH**
**Dieselstrasse 30-40**
**D-6000 Frankfurt/Main (DE)**

(72) Erfinder : **HARTMANN, Ernst**
**An der Siechkirche 10**
**D-6320 Alsfeld (DE)**
Erfinder : **STUHR, Hans, Waldemar**
**Butzbachweg 14**
**D-8750 Aschaffenburg (DE)**

(74) Vertreter : **Schaefer, Gerhard, Dr.**
**Linde Aktiengesellschaft Zentrale Patentabteilung**
**D-6023 Höllriegelskreuth (DE)**

## Beschreibung

Die Erfindung betrifft ein mehrachsiges Kraftfahrzeug, insbesondere Nutzlastfahrzeug, welches einen verwindungsweichen Rahmen, vorzugsweise einen mit einem aufgesetzten Montagerahmen verbundenen Rahmen, und einen auf diesem Rahmen mittels Abstützorganen abgestützten, wenig verwindungsfähigen Aufbau aufweist, vorzugsweise einen Aufbau mit einer Bodenkonstruktionsgruppe, insbesondere einen Kastenaufbau, der Geräte zum Inhalt hat, wie beispielsweise ein Werkstattkastenaufbau eines Werkstattwagens, wobei in Richtung der Längserstreckung des Fahrzeuges im mittleren Bereich des Aufbaues zwischen diesem und dem Rahmen eine Vertikalkräfte und Längskräfte nachgiebig aufnehmende, Relativbewegungen zwischen Rahmen unf Aufbau beschränkt zulassende Verbindung vorgesehen ist, und mindestens ein Abstützorgan in mindestens einem weiteren, in Richtung der Fahrzeuglängserstreckung versetzten Bereich angeordnet ist, wobei in mindestens einem Bereich des Aufbaues zwischen diesem und dem Rahmen eine Querkräfte aufnehmende Seitenschubstützverbindung vorgesehen ist.

Aus der DE-A-2201339 ist ein mehrachsiges Kraftfahrzeug bekannt, bei dem der Aufbau auf einer Vielzahl von Federn abgestützt ist und wobei zusätzliche, aufwendige Organe zum Aufnehmen der zwischen Aufbau und Rahmen auftretenden, insbesondere bei Längs- und Seitenbeschleunigungen auftretenden Kräfte vorgesehen sind, unter anderem eine nachgiebige Querlenkerseitenschubstützverbindung. Diese bekannte Anordnung hat den Nachteil, daß sie nicht berücksichtigt, daß nur in der Neutralphase (neutralen Faser) keine Bewegungen auftreten, vielmehr sind bei dieser bekannten Anordnung alle Stützorgane in einem Bereich angeordnet, in dem im Fahrzeugrahmen erhebliche Verformungen auftreten. Diese bekannte Lösung führte zu Rissen am Rahmen und im Bereich des Aufbaubodens. Die Querlenkerschubstützverbindung hat im Zusammenhang mit diesem Aufbau eine andere Bedeutung wie im Zusammenhang mit der vorliegenden Erfindung.

Weiterhin ist ein Transportgerät für extrem große und schwere Lasten bekannt, welches aus drei Einzelfahrwerken mit je einem Gleiskettenpaar besteht. Die Gesamtlast ist auf einem Tragkörper abgestützt, der seinerseits an drei Ecken abgestützt ist und zwar an jeder Ecke auf den Mittelpunkt eines Einzelfahrwerkes, wobei an jedem dieser Stützpunkte ein kräftiger Stützzapfen vorgesehen ist, der sich mit einer balligen Fläche gegen eine ebene Stützplatte abstützt und allseitig von einer zylindrischen Führung umgeben ist, welche Horizontalkräfte aufnimmt. Infolge der Abstützung auf der balligen Fläche kann das Fahrwerk um einen bestimmten Winkelbetrag um den Mittelpunkt der balligen Fläche schwenken (GB-A-1 511 140). Infolge der zylindrischen Führung, die zur Übertragung der Horizontalkräfte dient, kann die ballige Fläche nicht auf der ebenen Fläche abwälzen, sondern muß notwendig unter Reibung auf dieser gleiten. Unter der großen Belastung ist das nur mit großen Kräften und damit großem Verschleiß möglich. Der Stützpunkt wird immer im Mittelpunkt der die Horizontalkräfte aufnehmenden zylindrischen Führung liegen. Bei einem anderen bekannten Kraftfahrzeug ist die Bodenkonstruktionsgruppe des Aufbaues an ihrem vorderen Ende mittels zweier Federelemente mit großen Ausgleichswegen auf den Kraftfahrzeugrahmen abgestützt und an einer in Längsrichtung versetzten, dritten, in der Mitte des Fahrzeugrahmens angeordneten Lagerstelle in Form eines Gummigelenklagers am hinteren Ende gegenüber dem Rahmen abgestützt, wobei dazwischen als weiteres Lagerstellenpaar zwei Laschen zwischen Bodenkonstruktionsgruppe und Fahrzeugrahmen angeordnet sind. (DE-A-29 11 722) Die Federelemente sind zwar verformbar, die Verformung erfolgt jedoch unter Wirkung von Kräften, die in die Bodenkonstruktionsgruppe des Aufbaues eingeleitet werden und entsprechend den Aufbau mit Kräften belasten. Auch die auf das mittlere, aus Laschen bestehende Lagerstellenpaar eingeleiteten Kräfte sind infolge der Ausgestaltung der Verbindung sehr groß.

Der Erfindungsgegenstand ist besonders geeignet für Fahrzeuge mit großem Achsabstand, sowie für Fahrzeuge, die unebenes Gelände befahren sollen.

Der Erfindung liegt die Aufgabe zugrunde, die Lastkräfte aus dem Aufbau möglichst günstig auf dem Rahmen zu übertragen und die Gegenstützkräfte vom Rahmen derart auf den Aufbau zu übertragen, daß dieser möglichst wenig durch Verwindungskräfte beansprucht wird, so daß sich der Rahmen bei Befahren von unebenem Gelände verwinden kann, jedoch nur möglichst geringe, aus dieser Verwindung resultierende Kräfte auf den Aufbau übertragen werden. Gemäß dem Erfindungsgedanken wird zur Lösung dieser Aufgabe der Momentanpol der Relativbewegung zwischen Rahmen und Aufbau, das heißt, der Punkt, um den bei einem kleinen Verschwenkwinkel die Verschwenkung erfolgt, möglichst genau in der Verwindungsachse des Rahmens angeordnet und zwar auch dann, wenn in dem Bereich, in dem die Verwindungsachse liegt, ein Fahrzeugteil, z. B. die Kardanwelle oder ein Ersatzreifen, liegt.

Gemäß der Erfindung ist das in mindestens einem weiteren Bereich des Aufbaues angeordnete Abstützorgan mindestens an einem Ende des Aufbaues angeordnet und weist eine bogenförmige, mit dem Rahmen verbundene Abwälzkurvenfläche auf, deren Krümmungsachse zumindest annähernd koaxial zur Verwindungsachse des Rahmens liegt, wobei die Seitenschubstützverbindung auf die Bewegungsmöglichkeit des Abstützorganes abgestimmt ist. Durch das Übertragen der Vertikalkräfte auf eine bogenförmige Abwälzkurvenfläche ist es dem Rahmen möglich, Verwindungsbewegungen auszuführen und verwundene Lagen einzunehmen, ohne dabei unsymmetrische Vertikalkräfte auf den Aufbau zu übertragen oder zumindest derartige Bewegungen auszuführen und Lagen einzunehmen und dabei nur sehr geringe unsymmetrische Vertikalkräfte auf den Aufbau zu übertragen. Die Gewichtkraft ruht vielmehr immer vertikal auf der bogenförmigen Abwälzkurvenfläche, die zusammen mit dem Rahmen um die Verwindungsachse verschwenkt. Über die Länge des Rahmens verteilt können mehrere derartige Abwälzkurvenflächen zueinander parallel angeordnet sein, die untereinander vollkommen gleich oder im Prinzip gleich ausgestattet angeordnet sind, es können aber auch andere Stützorgane in anderen Bereichen vorgesehen sein. Durch jede dieser Abwälzkurvenflächen wird dann ein entsprechender Lastanteil in den Rahmen eingeleitet, so daß die Verteilung der Last auf den Rahmen gleichmäßiger wird und der Montagerahmen (Hilfsrahmen), der zusätzlich auf den normalen Fahrzeugrahmen aufgebaut werden muß, um eine nur punktförmig eingeleitete Last zu verteilen, kann entsprechend schwächer gehalten sein. Durch solche bogenförmige Abwälzkurvenfläche ist es möglich, die gedachte Schwenkachse, um die ein bestimmter kurzer Rahmenabschnitt relativ zum Aufbau verdreht wird, bzw. um die umgekehrt der Aufbau relativ zum Rahmen schwenkt, koaxial zur Verwindungsachse des Rahmens anzuordnen auch dann, wenn in dem Bereich des Rahmens, in dem die Verwindungsachse liegt, ein Fahrzeugteil wie Kardanwelle oder ein Getriebe oder ein Kraftstoffbehälter oder dergleichen angeordnet ist.

Denkbar ist auch eine kinematische Umkehrung, das heißt, eine ebene Fläche am Rahmen, auf der eine mit dem Aufbau verbundene, nach unten gewölbte bogenförmige Abwälzkurvenfläche abwälzt. Dann ergeben sich jedoch andere Relativbewegungsbedingungen, insbesondere in Bezug auf die Verlagerung des Abstützpunktes.

Da andererseits durch die bogenförmige Abwälzkurvenfläche gemäß der Erfindung keine Seitenkräfte übertragen werden können, da die beiden aufeinander abwälzenden Flächen unter Wirkung von Seitenkräften auch relativ zueinander aufeinander gleiten können, muß eine zusätzliche Seitenkraftabstützverbindung vorgesehen sein, durch die Seitenschubkräfte zwischen Bodenkonstruktionsgruppe und Fahrzeugrahmen übertragen werden, wobei diese Seitenschubstützverbindung auf die Gestaltung des Abstützorganes derart abgestimmt sein muß, daß die für die geforderte Relativbewegung erforderliche Bewegungsfreiheit gegeben ist und trotzdem bei jeder gegebenen Relativlage zwischen Fahrzeugrahmen und Aufbau zueinander eine Seitenkraftabstützung ohne Zwängungen möglich ist.

Bei einer Ausgestaltung eines Abstützorganes gemäß der Erfindung, bei der eine ebene Abwälzfläche auf einer bogenförmigen Abwälzkurvenfläche abwälzt, könnte als solche Seintenschubkraftstützungseinrichtung z. B. vorgesehen sein, daß parallel zu der ebenen Abwälzfläche eine Zahnstange und parallel zu der kreisbogenförmigen Abwälzkurvenfläche ein Zahnradsegment angeordnet ist, wobei die Zähne von Zahnstange und Zahnradsegment ineinander kämmen. Eine solche Einrichtung wäre allerdings ziemlich aufwendig und wartungsbedürftig. Eine andere zweckmäßige Ausgestaltungsform einer Seitenschubstützungsverbindung läßt sich ausgestalten, wenn zur Aufnahme der Zugkraft in jeder Richtung ein Zugorgan, beispielsweise eine Flyer-Kette vorgesehen ist, so daß also eine Kette an der einen Seite des Aufbaues und an der entgegengesetzten Seite des Rahmens angeschlagen ist und die andere genau entgegengesetzt, also beispielsweise ein Zugorgan an der linken Rahmenseite und an der rechten Seite des Aufbaues und das zweite Zugorgan umgekehrt an der linken Seite des Aufbaues und am rechten Rahmenholm, wobei jede Kette über eine Stützfläche geführt ist, die parallel zu der Abwälzkurvenbahn angeordnet ist, dieser gegenüber derart versetzt, daß die neutrale Faser des Zugorganes, beispielsweise die Achsen der Kettenbolzen der Flyer-Kette, genau in der Ebene der Abwälzkurvenfläche liegen. Die beiden Zugorgane können mittels elastischer Elemente oder vorzugsweise starr angeschlagen sein.

Da gleichzeitig ein Abheben verhindert werden soll, ist es bei den vorgennanten Seitenschubstützverbindungen zweckmäßig, wenn zusätzlich eine Vorrichtung, beispielsweise ein mit unter Vorspannung stehender Feder versehener Stützbolzen, die Abwälzfläche auf die Abwälzkurvenbahn drückt. Derartige Seitenschubstützverbindungen sind zweckmäßigerweise unmittelbar dem Abstützorgan benachbart angeordnet.

Bei einer anderen Ausgestaltungsform des Abstützorganes gemäß der Erfindung, bei der nicht eine ebene Abwälzfläche auf der bogenförmigen Abwälzkurvenbahn abwälzt, sondern die Vertikalkraft auf die Abwälzkurvenbahn durch eine Abwälzrolle bzw. Walze übertragen wird, die mit dem Aufbau verbunden und auf der bogenförmigen Abwälzkurvenfläche abgestützt ist, ergeben sich andere Formen der Relativbewegung zwischen Aufbau und Abwälzkurvenfläche, die eine andere Aufnahme der Seitenkräfte erforderlich machen. Dabei ist zu berücksichtigen, daß die im mittleren Bereich der Längserstreckung des Aufbaues vorgesehene Verbindung zwischen diesem und dem Rahmen in erster Linie dazu dient, auf jeder Seite Vertikalkräfte aufzunehmen, so daß, wenn dann, wenn eine weitere Verbindung vorgesehen ist, die Seitenschubkräfte in Vertikalkräfte umsetzt, diese von der genannten, im mittleren Bereich angeordneten Verbindung aufgenommen werden können. Zumindest in diesem Sinne kann als Seitenschubstützverbindung eine mit dem Aufbau starr verbundene Stütze vorgesehen sein, die um eine zumindest annähernd koaxial zur Verwindungsachse an einem im Rahmen angeordneten Querträger angeordnete Stützachse schwenkbar ist. Diese Stütze schwenkt also um die Verwindungsachse, so daß der mit dem Rahmen verbundene mittlere Teil dieser Stütze parallel zu der Abwälzrolle schwenkt. Dadurch wird die Seitenbewegung des Aufbaues gegenüber dem Rahmen bzw. umgekehrt in eine relative Vertikalbewegung umgesetzt, die von der im mittleren Bereich angeordneten Verbindung aufgenommen werden kann. Diese Stütze kann aber auch Vertikalkräfte vom Aufbau durch die Stütze auf die Stützachse und von dieser auf den Querträger und damit auf den Rahmen übertragen, kann also als ein Abstützorgan

3

gemäß der Erfindung vorgesehen sein, sofern die Bedingung erfüllt werden kann, daß die Stützachse zumindest annähernd koaxial zur Verwindungsachse des Rahmens angeordnet ist, das heißt, daß für diese Ausgestaltung der Kraftübertragung durch die Stütze auf eine Stützachse erforderlich ist, daß in dem Raum, in dem die Verwindungsachse liegt, kein Fahrzeugteil angeordnet ist.

Zum Aufnehmen der Längskräfte, die beim Bremsen und Beschleunigen parallel zur Fahrzeugslängsmittelebene auftreten, ist die im mittleren Bereich der Längserstreckung des Aufbaues angeordnete Verbindung vorgesehen, deren Ausgestaltung wiederum den Bedingungen der Ausgestaltung der Abstützorgane angepaßt sein muß. Zweckmäßige Ausgestaltungsformen für eine solche Verbindung mit mindestens zwei Laschen auf jeder Fahrzeugseite bzw. Rahmenseite sind in den Ansprüchen 21 bis 28 angegeben. Eine andere Ausgestaltungsform ist in dem Anspruch 29 angegeben. Diese Ausgestaltungsform ist wesentlich einfacher, wobei auch hier wieder der entscheidende Gedanke ist, daß die Achse, um die die Schwenkbewegung erfolgen soll, die Verwindungsachse des Rahmens schneidet, das heißt, daß sowohl die Achse, um die das Verbindungselement schwenkt, als auch die Verwindungsachse des Rahmens in der gleichen zur Rahmenebene parallelen Ebene liegen.

Zweckmäßige Ausgestaltungsformen der Einzelorgane der Erfindung sind in Unteransprüchen angegeben.

Die Erfindung ist im Folgenden anhand der in der Zeichnung dargestellten Ausführungsbeispiele näher erläutert.

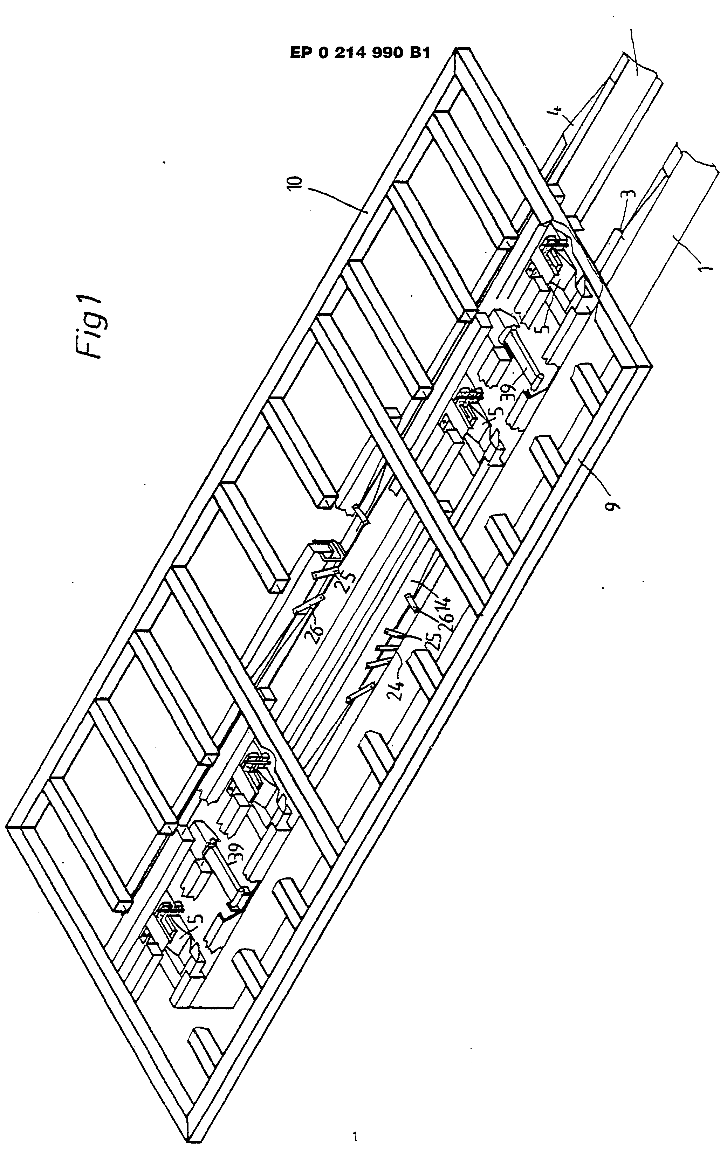

Figur 1 zeigt eine perspektivische Gesamtansicht eines Fahrzeugrahmens mit einer Bodenkonstruktionsgruppe.

Figur 2 zeigt Rahmen mit Bodenkonstruktionsgruppe in Seitenansicht, teils schematisiert in verschiedenen Verwindungslagen.

Figur 3 zeigt eine Draufsicht auf die Bodenkonstruktionsgruppenfläche.

Figur 4 zeigt in schematischer Darstellung eine Ansicht des Rahmens gemäß Figur 2 in Richtung der Fahrzeuglängsmittelachse in einer Ebene, in der eine Abwälzkurvenbahn liegt.

Figur 5 zeigt eine Ansicht in der gleichen Richtung wie Figur 4, jedoch in größerem Maßstab und mit mehr Einzelheiten.

Figur 6 zeigt in einer Ansicht in der gleichen Richtung wie die Figuren 4 und 5 die Abstützung auf einer Abwälzkurvenbahn, im Gegensatz zu den Figuren 4 und 5 mit maßstäblichen Proportionen.

Figur 7 zeigt eine Seitenansicht zu Figur 5 in Blickrichtung in der Zeichenebene gemäß Figur 5.

Figur 8 zeigt eine schematische Darstellung zu einer Längsschubverbindungseinrichtung.

Figur 9 zeigt einen Schnitt durch eine Lasche einer solchen Längsschubverbindungseinrichtung.

Figur 10 zeigt teils schematisiert eine Seitenschubverbindungseinrichtung.

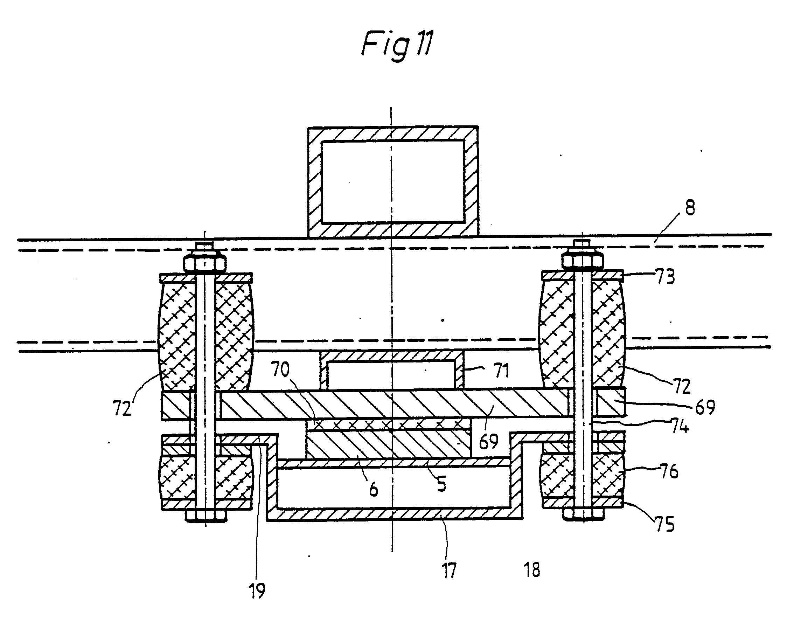

Figur 11 zeigt einen Schnitt durch die Einrichtung gemäß Figur 6, geschnitten in der Fahrzeuglängsmittelebene.

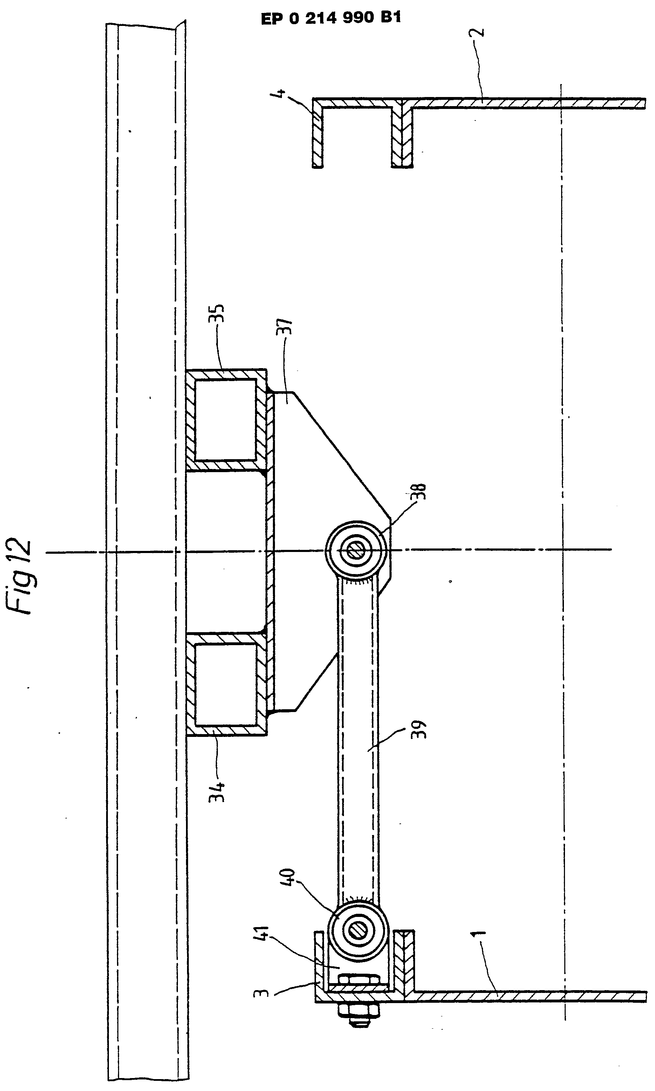

Figur 12 zeigt die Seitenschubverbindung gemäß Figur 10 in maßstäblicher Darstellung.

Figur 13 zeigt eine Darstellung ähnlich Figur 10, jedoch mit mehr Angaben für die Bestimmung der erforderlichen Abmessungen.

Figur 14 zeigt in Blickrichtung parallel zur Fahrzeuglängsachse ein Abstützorgan, bei dem die Abwälzkurvenfläche an der Oberseite einer im mittleren Bereich nach oben gewölbten Querstrebe gebildet ist.

Die Figuren 15 und 16 zeigen in Ansicht von der Seite eine aus einer Laschengruppe bestehende, im mittleren Bereich der Längserstreckung angeordnete Verbindung.

Figur 17 zeigt einen Schnitt in der Ebene, die durch die Achsen der beiden Bolzen einer Lachse gemäß Figur 16 geht.

Figur 18 zeigt eine Seitenschubstützeinrichtung mit Zugorganen in Ansicht parallel zur Fahrzeuglängsmittelebene.

Figur 19 zeigt einen Schnitt durch Figur 18 in der Fahrzeuglängsmittelebene.

Figur 20 zeigt ein Abstützorgan, bei dem die Vertikalkraft durch eine Abwälzrolle auf die Abwälzkurvenfläche übertragen wird, in Blickrichtung parallel zur Fahrzeuglängsachse.

Figur 21 zeigt einen Schnitt in der Fahrzeuglängsmittelebene durch die Ausgestaltungsform gemäß Figur 20.

Figur 22 zeigt eine andere Ausgestaltungsform eines Abstützorganes in Ansicht parallel zur Fahrzeuglängsachse.

Figur 23 zeigt einen Schnitt durch Figur 22 in der Fahrzeuglängsmittelebene.

Figur 24 zeigt eine perspektivische Darstellung mit einem Abstützorgan gemäß den Figuren 20 und 21 und mehreren Abstützorganen gemäß den Figuren 22 und 23.

Figur 25 zeigt in Seitenansicht eine Verbindungseinrichtung im mittleren Bereich des Fahrzeugaufbaues.

Figur 26 zeigt einen Schnitt durch Figur 24 in Blickrichtung parallel zur Fahrzeuglängsachse.

Figur 27 zeigt einen Schnitt durch ein Ende einer Rahmenquertraverse.

Figur 28 zeigt einen Schnitt senkrecht zum Schnitt gemäß Figur 27 des anderen Endes der gleichen Rahmenquertraverse und

Figur 29 zeigt eine Seitenansicht, das heißt mit Blickrichtung auf den Kopf der Quertraverse.

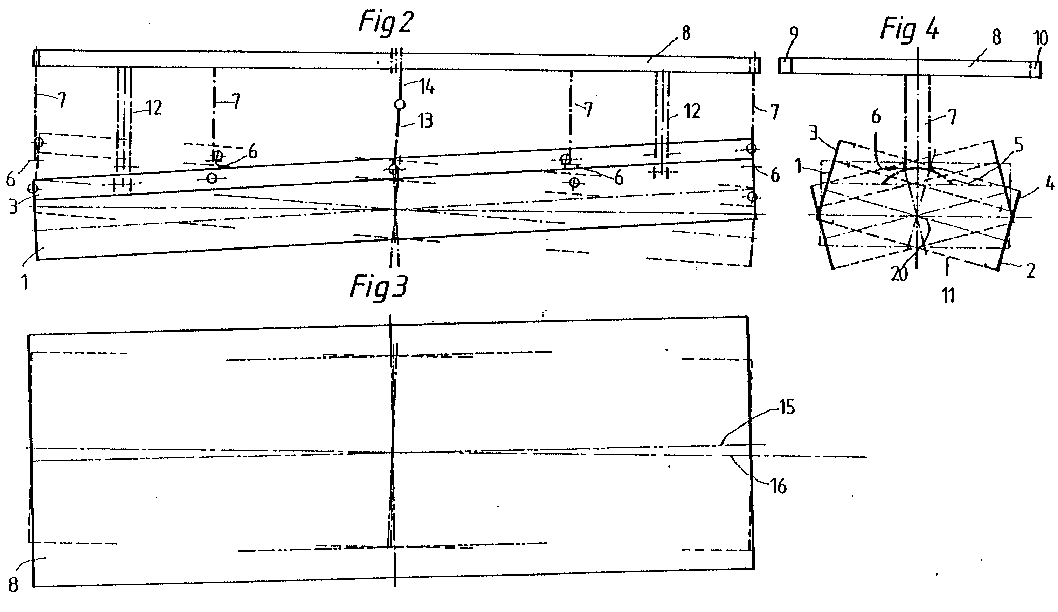

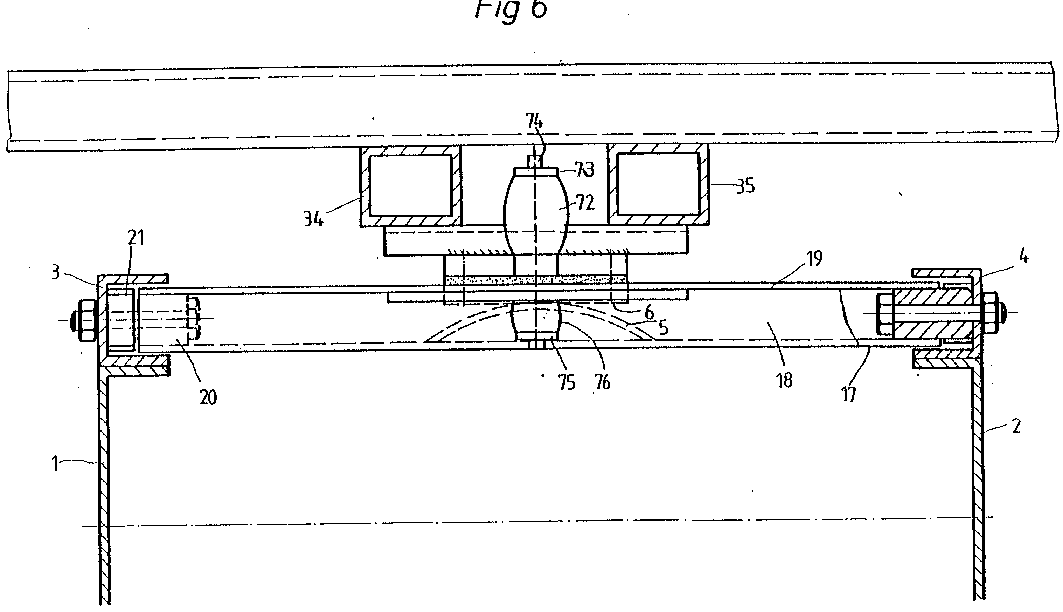

Der Rahmen des Fahrzeuges weist einen linken Holmsteg 1 und einen rechten Holmsteg 2 auf, die durch den Querträger 11 miteinander verbunden sind. Auf den linken Holmsteg 1 ist ein U-förmiger Montagerahmenholm 3 aufgesetzt und auf den rechten Holmsteg 2 ist ein ebensolcher Montagerahmenholm 4 aufgesetzt. In figur 4 ist der Rahmen 1, 2 mit dem Montagerahmen 3, 4 in dickausgezogenen Linien nach rechts verwunden dargestellt, in gestrichten Linien in seiner Neutrallage dargestellt und in dünnen ausgezogenen Linien nach links verwunden dargestellt. Auf einem Querträger ist die Abwälzkurvenbahn 5 befestigt, auf der die Abwälzfläche 7 abwälzen kann, die am unteren Ende einer Stütze 7 angeordnet ist, die in der Figur 4 nur symbolisch dargestellt ist und in größerer Höhe dargestellt ist als in Wirklichkeit. Dabei ist in Figur 4 die Stütze 7 und die Bodenkonstruktionsgruppe 8 nur in ihrer Neutrallage dargestellt.

Aus Figur 2 ist zu ersehen, daß insgesamt vier derartige Stützstreben 7 mit jeweils einer Abwälzfläche 6 vorgesehen sind, damit die Vertikallasten an vier Stellen in den Montagerahmen eingeleitet werden, so daß sich eine günstige Verteilung der Last auf die Fahrzeugrahmenlänge ergibt. Die Bodenkonstruktionsgruppe 8 selbst weist einen linken Randholm 9 und einen rechten Randholm 10 auf.

Die in Figur 4 dick ausgezogen dargestellte Lage des Rahmens 1, 2 mit Montagerahmen 3, 4 entspricht der Draufsicht auf das in Figur 2 rechte Ende. Die am rechten Ende von Figur 2 gestricht nach unten herausragende Position des linken Holmsteges 1 entspricht der dünn ausgezogenen Lage gemäß Figur 4.

Aus Figur 2 ist weiterhin zu ersehen, daß zwei Seitenschubstützverbindungen 12 vorgesehen sind, die in Figur 2 nur schematisch dargestellt sind und eine Längsschubverbindung 13 vorgesehen ist, die an einem Unterträger 14 befestigt ist, der mit der Bodenkonstruktionsgruppe 8 starr verbunden ist. Auch die Längsschubverbindung 13 und der Unterträger 14 sind nur schematisch dargestellt. Die kleinen Kreise geben an, wie sich einzelne Punkte des linken Montagerahmenholmes 3 bei der Verwindung des Rahmens verschieben.

Aus Figur 3 ist zu erkennen, wie sich infolge des Abwälzens der Abwälzflächen 6 auf den Abwälzkurvenflächen 5 die Mittelebene 15 der Bodenkonstruktionsgruppe gegenüber der Fahrzeugrahmenlängsmittelebene 16 verschwenkt.

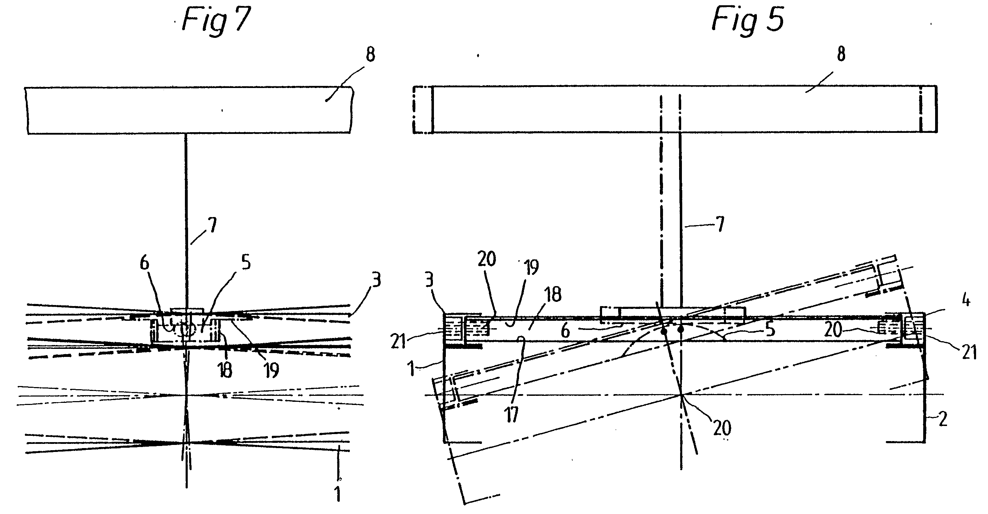

In Figur 5 ist zu erkennen, daß die Abwälzkurvenfläche 5 auf der Bodenfläche 17 eines Hutprofilträgers befestigt ist, der Seitenwände 18 und Stege 19 aufweist. Dieser Hutprofilträger 17, 18, 19 ist an jedem Ende starr mit einem Dickwandrohr 20 verbunden, welches als Tragzapfen dient und in ein weiteres Dickwandrohr 21 eingesteckt ist, welches starr mit dem jeweils zugeordneten Montagerahmenholm 3 bzw. 4 verschweißt ist. Dadurch kann sich der Hutprofilträger 17, 18, 19 gegenüber dem Montagerahmen 3, 4 verdrehen. Das ist erforderlich, weil bei der Verwindung des Fahrgestellrahmens 1, 2 sich der Montagerahmen 3, 4 mit verwindet, während der Hutprofilträger 17, 18, 19 in seiner Normallage verbleiben soll. Die Platte, an der die Abwälzfläche 6 gebildet ist, ist über ein elastisches Polster 70 gegen die Tragplatte 69 abgestützt, die ihrerseits über ein U-Profil 71 gegenüber der Bodenkonstruktionsgruppe 8 abgestützt ist. Damit ein Abheben der Abwälzfläche 6 von der Abwälzkurvenfläche 5 vermieden wird und auch damit elastische Rückführkräfte erzeugt werden können, ist auf jeder Seite auf die Zwischenplatte 69 ein Gummifederkörper 72 aufgesetzt, gegen den eine obere Abdeckfläche 73 liegt, die eine Bohrung aufweist, durch die ein Schraubenbolzen 74 hindurchgesteckt ist, der mit großem Spiel durch eine Bohrung in der Zwischenplatte 69 hindurchgeht, wobei der Kopf dieses Schraubenbolzens 74 gegen eine zweite Abdeckplatte 75 anliegt, die ein zweites elastisches Gummizwischenstück 76 begrenzt, welches gegen den Steg 19 anliegt.

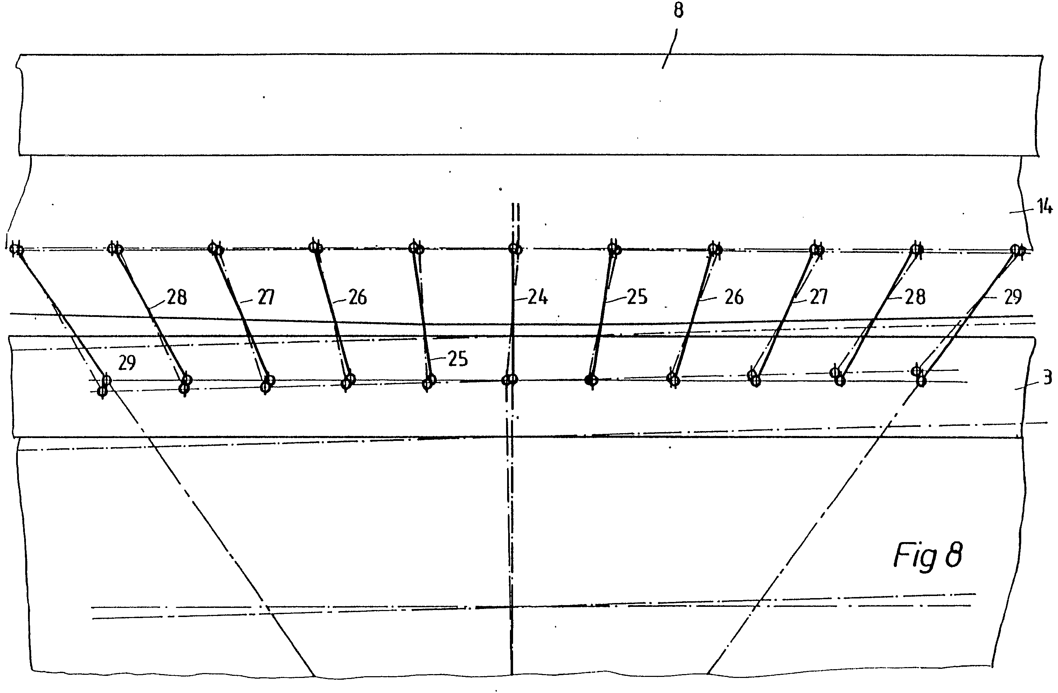

Die in Figur 8 dargestellte Längsschubverbindung weist auf jeder Fahrzeugseite eine Mittellasche 24 und je zwei Laschen 25, 26, 27, 28 und 29 auf. Die oberen Enden jeder Lasche sind durch je ein in Figur 8 nicht mehr dargestelltes Metallgummigelenk mit dem Unterträger 14 verbunden. Die jeweils unteren Enden sind durch je ein ebensolches Gelenk mit dem Montagerahmenholm 3 (bzw. auf der anderen Seite des Fahrzeuges 4) verbunden.

In der Neutrallage schneiden sich die Längsmittelebenen aller Laschen 24 bis 29, wobei jede Längsmittelebene durch die Mittellinie beider Gelenke geht, zumindest annähernd in einer Schnittlinie, die in Figur 8 unterhalb der Begrenzung der Zeichenfläche liegt. Verwindet sich der Rahmen 1, 2 mit Hilfsrahmen 3, 4, so wandern die durch kleine Kreise symbolisierten unteren Gelenkpunkte der Laschen 24 bis 29 in der in Figur 8 dargestellten Weise aus. Wirkt auf die Bodenkonstruktionsgruppe 8 eine Längsschubkraft, so ergeben sich infolge der Laschen 24 bis 29 Kräfte, aufgrund deren in der Bodenkonstruktionsgruppe ein Moment um die Linie auftritt, in der sich die Längsmittelebenen der Laschen 24 bis 29 schneiden. Da aber die Bodenkonstruktionsgruppe infolge der Stützung in den Abwälzflächen 6/Abwälzkurvenbahnen 5 nicht um diese Linie schwenken kann, ist das Fahrzeug dadurch stabilisiert. Der Unterträger 14 erstreckt sich im Wesentlichen nur in dem Bereich, in dem die Laschen 24 bis 29 angelenkt sind.

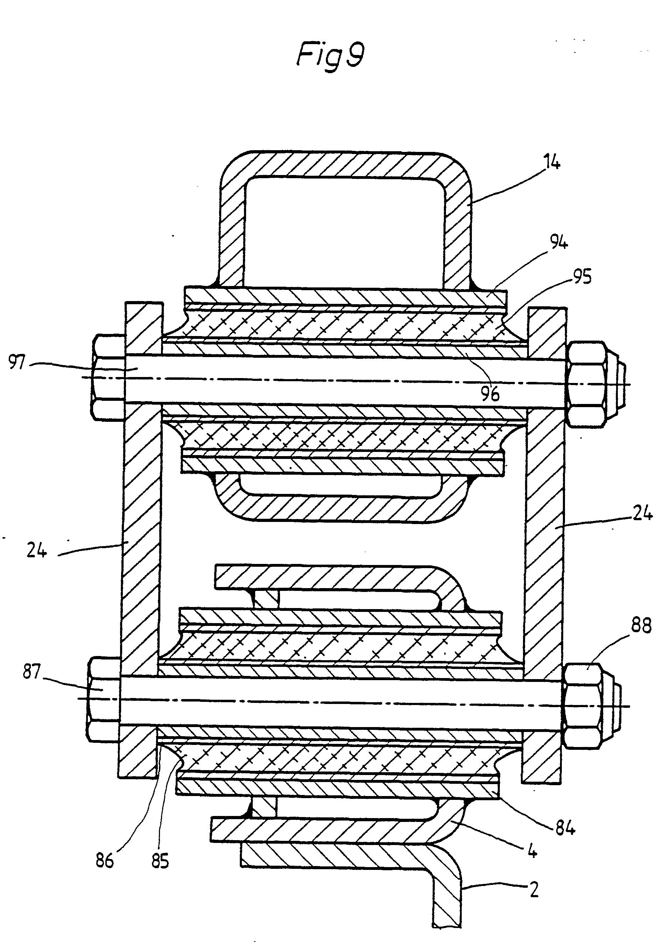

Der in einer zur Fahrzeuglängsachse senkrechten Ebene verlaufende Schnitt durch die Laschen 24, der in Figur 9 dargestellt ist, läßt die Einzelheiten besser erkennen. Mit dem Montagerahmen 4 ist die äußere Buchse 84 eines Gummimetallagers verbunden, dessen Gummibuchse 85 auf eine Hülse 86 gesetzt ist, durch deren Längsbohrung ein Schraubenbolzen 87 hindurchgesteckt ist, der durch die beiden unteren Bohrungen der beiden Laschen 24 hindurchgeht und durch eine Mutter 88 festgelegt ist. In den Unterträger 14 ist eine Buchse 94 eingeschweißt, in die ein Gummimetallager mit einer Gummibuchse 95 eingesetzt ist, die ihrerseits auf der Hülse 96 ruht, die auf einen zweiten Schraubenbolzen 97 gesteckt ist, der durch die oberen Bohrungen der beiden Laschen 24 geht.

5

Das Prinzip der Abstützung auf der Abwälzkurvenbahn 5 beruht also auf dem Gedanken, eine Bewegung um die Verwindungsachse des Fahrzeugrahmens herum zu ermöglichen. Anstelle der Abstützung über die auf der Abwälzkurvenbahn 5 abwälzende Abwälzfläche 6 eine Abstützung in einem Gelenk vorzusehen, dessen Achse in der Verwindungsachse liegt, ist nicht möglich, da in dem Bereich, in dem die Verwindungsachse verläuft, andere Bauteile des Kraftfahrzeuges vorgesehen sind, gegebenenfalls die Kardanwelle.

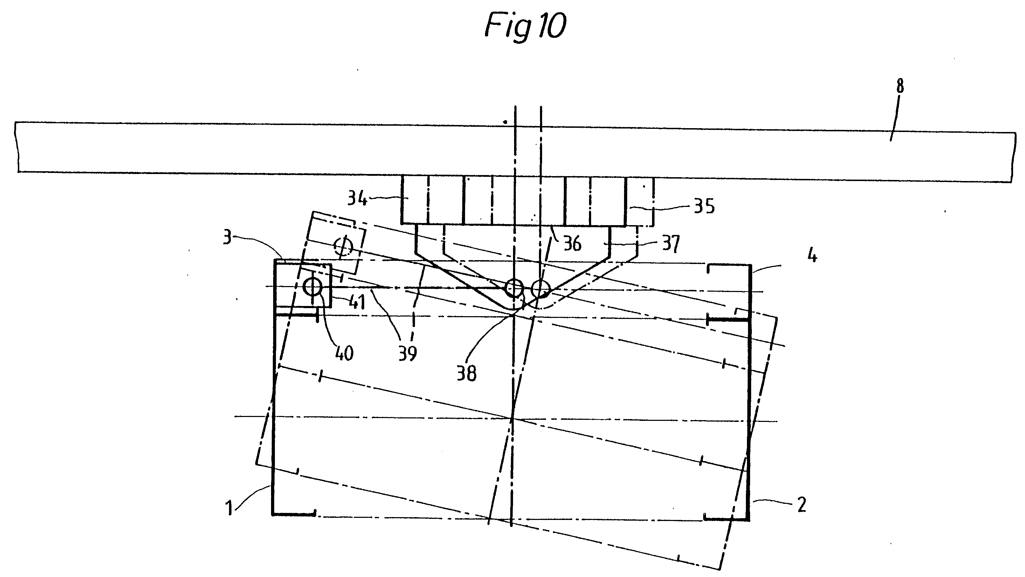

Ein weiterer Unterträger mit den Seitenholmen 34 und 35 ist im Bereich der Seitenschubstützverbindungen 12 vorgesehen, von denen eine im Schnitt senkrecht zur Fahrzeuglängsmittelebene in Figur 10 dargestellt ist. Die beiden Längsholme 34 und 35 sind durch Querträger 36 miteinander verbunden, an denen zwei zueinander parallele Stützplatten 37 befestigt sind. Zwischen diesen beiden zueinander parallelen Stützplatten 37 ist ein Metallgummigelenk 38 befestigt, in dem gelenkig eine Querlenker-Stützstrebe 39 gelagert ist, deren zweites Ende in einem zweiten Metallgummibüchsengelenk 40 gelagert ist, welches zwischen zwei Platten 41 angeordnet ist, die in den Montagerahmenholm 3 eingeschweißt sind. Die Metallgummibüchsengelenke 38 und 40 und die Querlenker-Schubstange 39 sind in Figur 10 nur symbolisch dargestellt. In Figur 10 ist der Rahmen 1, 2 und der Montagerahmen 3, 4 und der Unterträger 34, 35 und die Stützplatten 37 ausgezogen in der Normallage dargestellt und strichpunktiert in der Lage, die diese Teile einnehmen, wenn sich der Fahrzeugrahmen so verwunden hat, wie in Figur 4 ausgezogen dargestellt. Dabei ist in Figur 10 der Abstand der Bodenkonstruktionsgruppe 8 von dem Fahrzeugrahmen 1, 2 maßstabgetreu dargestellt, also ohne die Überhöhung, die in den Figuren 2, 4, 5 und 7 der Stützstrebe 7 gegeben ist.

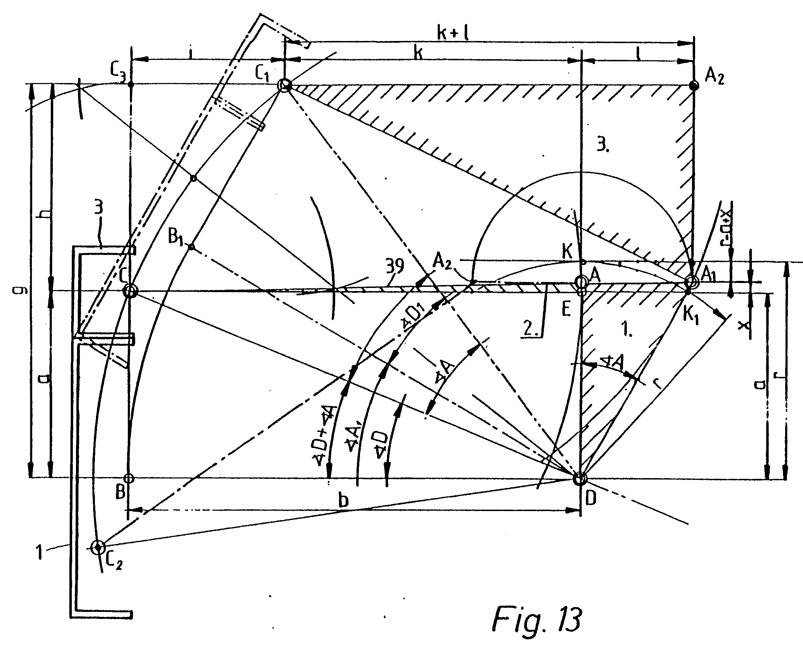

In Figur 13 sind diejenigen Maße und Bezugspunkte dargestellt, die geeignet sind, um eine zweckmäßige Länge für einen Querlenker 39 und für die Lage von dessen Gelenkpunkten 38 und 40 zu bestimmen.

Für diese Bestimmung sind bekannt:

$r$ = Radius der Abwälzkurvenfläche 5

$a = \overline{BC}$ = Höhe des Anlenkpunktes 40 der Querlenkerschubstange 39 im Montagerahmen 3 über der Verwindungsachse D

$b = \overline{BD}$ = Projektion der Querlenkerschubstange 39 = CA (abhängig von der Fahrgestellbreite).

Bestimmung der Winkel

$$\sphericalangle D = \sphericalangle BDC \triangle \sphericalangle D_1 = \sphericalangle B_1 DC_1 \quad (\Delta BDC \cong \Delta B_1 DC_1) = \tan^{-1}\frac{a}{b}$$

$$\overline{CD} = \overline{C_1 D}; \quad \overline{CD} = \sqrt{a^2 + b^2}$$

$\sphericalangle A$ = Verdrillungswinkel/Meter Fahrgestellänge × Abstand Mitte Querlenkerschubstange − Scherpunkt = Mitte mittlere Verbindungslasche.

$$\sphericalangle B = \sphericalangle B_1 = \sphericalangle DB_1 C_1 = 90°$$

$l$ = Bogenlänge der Abwälzkurvenfläche bei $\sphericalangle A = \dfrac{r \cdot \pi}{180°} \cdot \sphericalangle A$

$$g = C_1 D \cdot \sin (\sphericalangle A + \sphericalangle D) = \sqrt{a^2 + b^2} \cdot \cos \sphericalangle A + \left(\tan^{-1}\frac{a}{b}\right)$$

$$h = g - a$$

$$k = C_1 D \cdot \cos (\sphericalangle A + \sphericalangle D) = \sqrt{a^2 + b^2} \cdot \cos \sphericalangle A + \left(\tan^{-1}\frac{a}{b}\right)$$

$$i = b - k$$

Im Dreieck BCA sind bekannt: $\overline{BC} = a = BC$

Im Dreieck $B_1 C_1 A_1$ ist die Strecke $B_1 C_1$ bekannt, da diese gleich a ist.

In beiden Dreiecken ist die Länge der Querlenkerschubstange 39 = CA = $C_1 A_1$

Ferner sind in beiden Dreiecken die Strecken BA und $B_1 A_1$ sowie alle Winkel unbekannt. Gesucht ist die Länge der Querlenkerschubstange 39 = CA = $C_1 A_1$ sowie der Abstand x des Anlenkpunktes von der Abwälzkurvenbahnfläche 5.

Diese wird aus folgenden Bestimmungen gefunden:

1) Im $\Delta DAA_1 = \sphericalangle A = 90°$; $AA_1 = l = \dfrac{r \cdot \pi}{180°} \cdot \sphericalangle A$

$$\overline{AD} = \frac{l}{\tan \sphericalangle A} = \frac{\dfrac{r \cdot \pi}{180°} \cdot \sphericalangle A}{\tan \sphericalangle A}$$

$$\underline{\underline{X = \overline{AC} - a}}$$

2) Im $\triangle ACE$ = bekannt : $\overline{CE}$ = b und x

$$\text{Querlenkerschubstange} = \overline{CA} = \sqrt{x^2 + b^2}$$

$$\sphericalangle A\underline{C}E = \tan^{-1}\frac{x}{b}$$

$$\sphericalangle BCA = 90° + \sphericalangle A\underline{C}E$$

3) Kontrollrechnung. Im $\triangle A_1 A_2 C_1 = \sphericalangle A_2 = 90°$ ; $A_1 - A_2 = h - x$ ; $K + I$, bei Querlenkerschubstange verwund. Fahrgest. $C_1 A_1 = \sqrt{(K + I)^2 + (h - x)^2}$

$$\sphericalangle C_1 = \tan^{-1}\frac{h - x}{K + I}$$

$$\sphericalangle A_1\underline{C}_1B_1 = 90° + \sphericalangle D_1 - \sphericalangle \left(\tan^{-1}\frac{h - x}{K + I}\right)$$

4) Winkeldifferenz = Verdrehung der Metallgummibuchse = $\sphericalangle A_1\underline{C}_1B_1 - \sphericalangle A\underline{C}E$

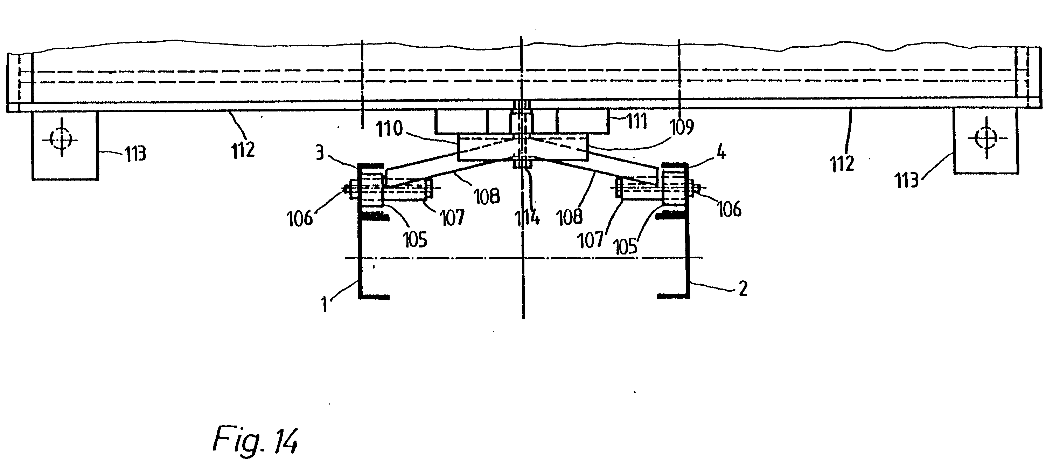

In Figur 14 sind wiederum mit 1 und 2 die beiden Holme des Fahrzeugrahmens und mit 3 und 4 die beiden Holme des auf den Fahrzeugrahmen aufgesetzten Montagerahmens bezeichnet. In jeden der Holme 3 und 4 des Montagerahmens ist eine aus einem Abschnitt eines Dickwandrohres gebildete Muffe 105 eingeschweißt, durch deren Bohrung ein Schraubbolzen 106 hindurchgesteckt ist, auf dessen zur Mitte des Fahrzeuges hin ragenden Teil eine zweite Muffe 107 aufgesetzt ist, die starr mit einer Querstrebe 108 verbunden ist. Die Querstrebe 108 besteht aus einem Vierkantrohr, dessen beide Enden mit je einer Muffe 107 verschweißt sind und das im mittleren Bereich derart gekrümmt ist, daß auf der Oberfläche die Abwälzkurvenfläche gebildet ist, auf der die ebene Abwälzfläche 109 abwälzt, die durch die untere, das heißt, innere Wand des Steges eines nach unten offenen U-Profileisens 110 gebildet ist, das seinerseits über eine Zwischenkonstruktion 111 mit dem Unterträger 112 der Bodenkonstruktionsgruppe, die durch Seitenträger 113 versteift ist, verbunden ist.

Es ist offensichtlich, daß die Konstruktion auch umgekehrt sein kann, das heißt, anstelle der Querstrebe 108 ist ein nach oben offenes U-Profil vorgesehen, auf dessen Steg ein kastenförmiger Körper, der an die Stelle des Körpers 109 tritt, abwälzt.

Wahlweise in der Mittelebene des Quersteges 108 oder neben dieser ist eine elastische Abstützung 114 vorgesehen, die der Abwälzfläche 109 erlaubt, sich auf der Oberseite des Quersteges 108 abzuwälzen, jedoch Querverschiebungen verhindert.

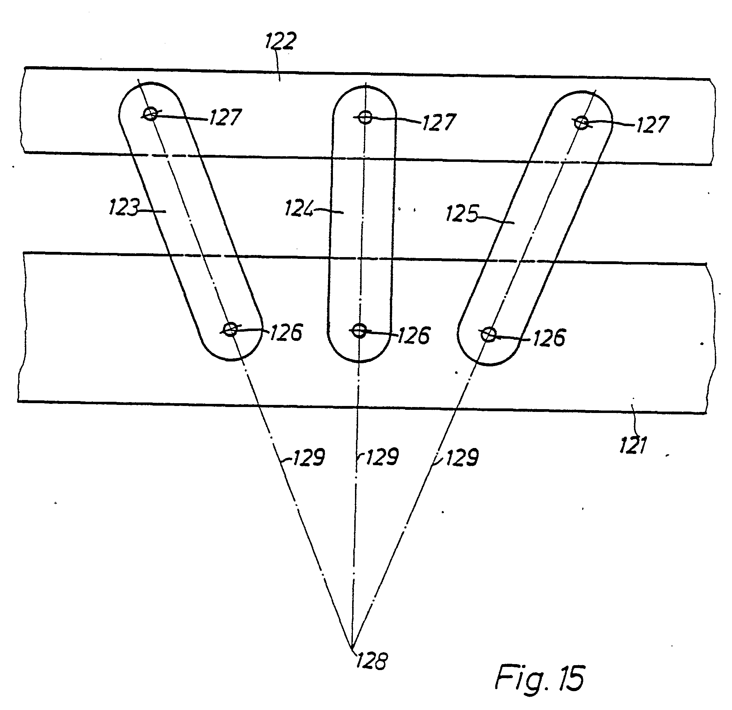

Die in Figur 15 dargestellte Ausgestaltungsform einer Verbindungslaschengruppe mit drei Verbindungslaschen stellt die Verbindung zwischen dem Rahmenlängsholm 121 und dem Aufbauuntergurt 122 her. In Normalfall ist der Längsholm 121 Holm eines Montagerahmens, der auf einen in der Zeichnung Figur 15 nicht mehr dargestellten Fahrzeugrahmen aufgesetzt ist. Zur Verbindung zwischen Längsholm 121 und Unterzuggurt 122 sind drei Verbindungslaschen 123, 124 und 125 vorgesehen, wobei jede der Verbindungslaschen 123, 124, 125 mittels eines Bolzens 126 gelagert ist, der seinerseits elastisch in dem Längsholm 121 abgestützt ist und andererseits mittels eines Stützbolzens 127 gelagert ist, wobei jeder der Stützbolzen 127 elastisch in dem Unterzuggurt 122 gelagert ist.

In Figur 15 sind die drei Laschen 123, 124 und 125 in der Lage gezeichnet, die sie einnehmen, wenn keine Kräfte auf sie einwirken. Dabei ist zu erkennen, daß die drei Längsmittellinien 129 sich gemeinsam in einem Punkt 128 schneiden wobei jeweils eine Längsmittellinie 129 sowohl durch die Achse eines Stützbolzens 126 als auch durch die Achse eines Stützbolzens 127 der gleichen Verbindungslasche 123 bzw. 124 bzw. 125 geht.

Wenn es möglich sein soll, daß sich infolge von Vertikalbelastungen der Unterzuggurt 122 gegenüber dem Längsholm 121 nähern kann, so geschieht das durch elastische Verformung in den elastischen Lagerungen der Stützbolzen 126 und 127. Wenn jedoch am Unterzuggurt 122 eine Längskraft in Längsrichtung desselben wirkt und im Längsholm 121 wirkt eine Längskräft in der entgegengesetzten Richtung, so kann zwar ebenfalls einer Verlagerung im Umfang der elastischen Nachgiebigkeit der Lager der Stützbolzen 126 und 127 erfolgen. Im übrigen aber erfolgt schon bei einer geringen Schwenkbewegung ein Auswandern der Mittellinien aus dem gemeinsamen Schnittpunkt 128, so daß beispielsweise dann, wenn in dem Unterzuggurt 2 eine Längskraft nach in der Zeichnung rechts wirkt, eine weitere Verschiebung des Unterzuggurtes 122 nach in der Zeichnung rechts nur dann möglich wäre, wenn die Verbindungslasche 125 um den Stützbolzen 126 im Uhrzeigersinn schwenkt und damit das in der Zeichnung rechte Ende des Unterzuggurtes 122 sich dem Längsholm 121 nähert. Das aber ist nicht möglich, da in Abstand von der in Figur 15 dargestellten Längsschubverbindung Vertikalkraftabstützorgane, die in Figur 15 nicht mehr dargestellt sind, vorgesehen sind, die ein Absinken des Unterzuggurtes 122 gegenüber dem Längsholm 121 verhindern. Somit ist durch die Schubstützverbindung 123, 124, 125, 126, 127 eine Längskraftaufnahmeeinrichtung gegeben, die nur geringe Relativverschiebungen zwischen Unterzuggurt 122 und Längsholm 121 zuläßt.

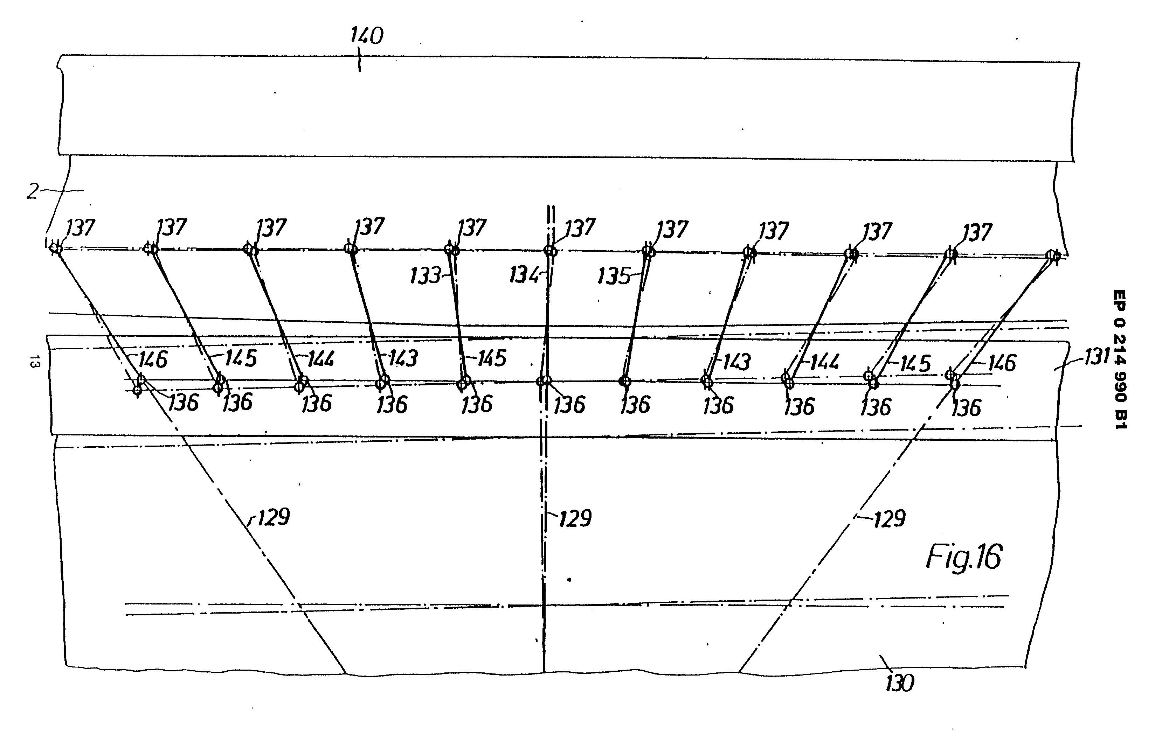

Bei der Ausgestaltungsform gemäß Figur 16 ist der Rahmenlängsholm 130 starr mit dem Montagerahmen 131 verbunden, in dem die Stützbolzen 136 elastisch gelagert sind, wobei auf jedem der Stützbolzen 136 eine in Figur 16 nur symbolisch als Strich dargestellte Verbindungslasche 133 oder 134 oder 135 oder 143 oder 144 oder 145 oder 146 gelagert ist, von denen jede mit ihrem oberen Ende mittels eines Gelenkbolzens 137 in dem Unterzuggurt 122 gelagert ist, der starr mit dem Bodenteil 140 des weiter nicht mehr dargestellten Fahrzeugaufbaues verbunden ist.

In Figur 16 sind strichpunktiert die Lagen der jeweils durch die Stützbolzenachsen der jeweils einander bzw. der gleichen Verbindungslasche zugeordneten Stützbolzen gehenden Mittellinien 129 dargestellt, die sich bei Verlagerung unter Krafteinwirkung ergeben.

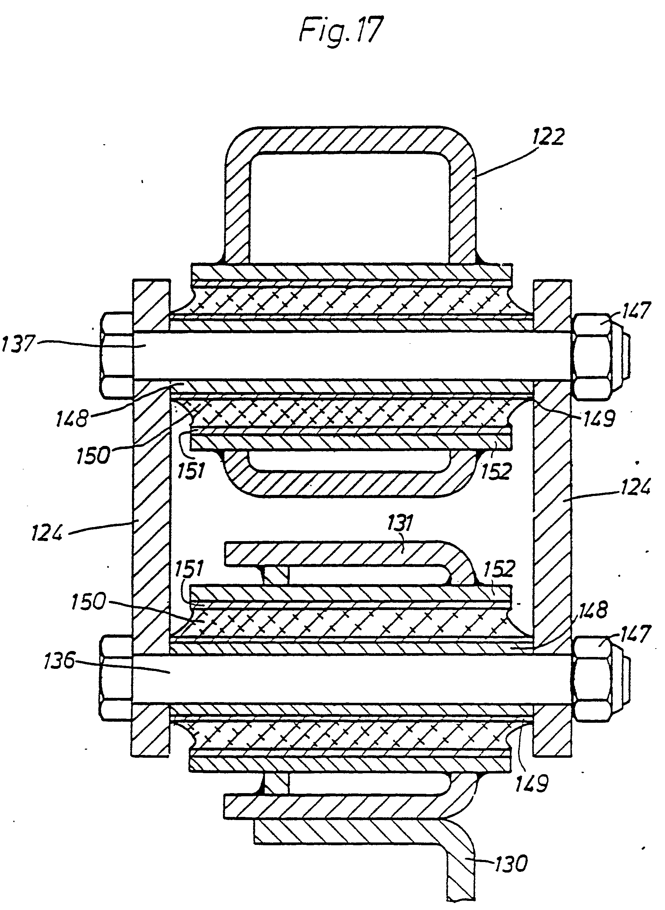

Aus dem in Figur 17 dargestellten Querschnitt ist zu erkennen, daß jeder Stützbolzen 136 oder 137 durch zwei zueinander koaxiale Bohrungen von zwei zueinander parallelen Verbindungslaschen, die ein Laschenpaar bilden, gesteckt ist und als Gewindebolzen ausgestaltet ist, in Figur 17 gezeigt am Beispiel der Lasche 124. Der Gewindebolzen ist jeweils durch eine Mutter 147 festgelegt, wobei durch die Mutter 147 die beiden Laschen 124 gegen eine Metallbuchse 148 gedrückt werden, die den Abstand zwischen den beiden Verbindungslaschen 124 bestimmt. Diese Metallbuchse 148 ist in die innere Metallbuchse 149 des Gummimetallgelenkes eingelagert, welches eine Gummipolsterbuchse 150 aufweist, welche nach außen durch eine Metallbuchse 151 begrenzt ist, die in der Außenbuchse 152 ruht, die in dem Montagerahmen 131 bzw. dem Untergurt 122 festgelegt ist.

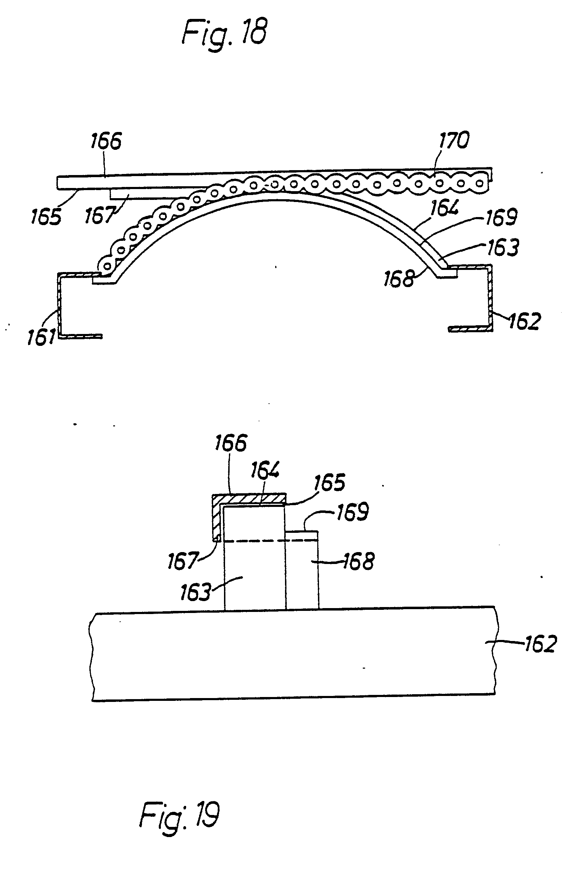

In den Figuren 18 und 19 ist eine Ausgestaltungsform dargestellt, bei der auf den beiden Fahrzeugrahmenholmen 161 und 162 ein bogenförmiger Abwälzkurvenkörper 163 gelagert ist, an dessen Oberfläche die Abwälzkurvenfläche 164 gebildet ist, auf der die ebene Abwälzfläche 165 abgestützt ist und abwälzen kann, die an einer Abwälzflächenplatte 166 gebildet ist, welche ihrerseits in nicht näher dargestellter Weise mit dem Fahrzeugaufbau verbunden ist und die zumindest in ihrem mittleren Bereich einen Stützsteg 167 aufweist, der sich mit seiner vertikalen, dem Abwälzkurvenkörper 163 zugewandten Fläche gegen dessen Stirnfläche abstützen kann, um Längskräfte zu übertragen. An einem Stützflächenkörper 168 ist eine Stützfläche 169 gebildet.

Die Flyer-Kette 170 ist auf ihrem in Figur 18 linken Ende in nicht näher dargestellter Weise mit dem Längsholm 161 verbunden und ist auf ihrem in Figur 18 rechten Ende in nicht näher dargestellter Weise mit dem Fahrzeugaufbau verbunden. Die Stützfläche 169 ist gegenüber der Abwälzkurvenfläche 164 um die halbe Dicke (Stärke) der Flyer-Kette 170 zurückgesetzt, so daß die neutrale Faser, das heißt die Achsen der Laschenverbindungsbolzen in der Kette 170, in der gleichen Ebene liegt, wie die Abwälzkurvenfläche 164. Dabei ist der Stützkörper 168 und damit die Stützfläche 169 so breit ausgestaltet, daß auf der Stützfläche 169 nebeneinander zwei Flyer-Ketten sich abstützen können und zwar außer der in Figur 18 dargestellten Flyer-Kette 170 eine zweite in der Zeichnung nicht mehr dargestellte Kette, die mit ihrem einen Ende an dem Fahrzeugrahmenlängsholm 162 und mit ihrem in der Zeichnung linken Ende an dem Fahrzeugaufbau befestigt ist. Beide Ketten können an beiden Enden starr mit dem jeweils zugeordneten Bauteil verbunden sein oder wahlweise an einem oder an beiden Enden zur Aufnahme von Stößen elastisch abgefedert angeschlagen sein.

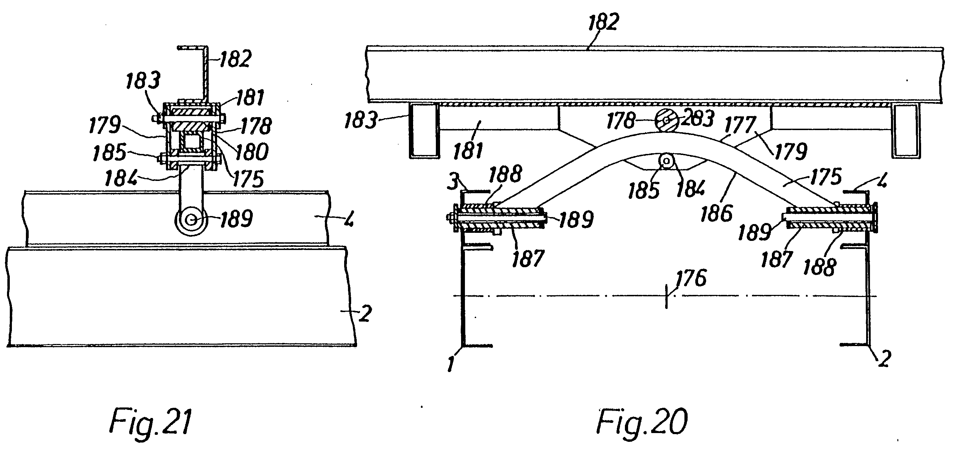

Bei der in den Figuren 20 und 21 dargestellten Ausgestaltungsform ist wiederum auf die beiden Holme 1 und 2 des Fahrzeugrahmens ein Montagerahmen mit den beiden Holmen 3 und 4 aufgesetzt. In dem Montagerahmen 3, 4 ist ein bogenförmiger Abwälzkurvenflächenkörper 175 gelagert, dessen mittlerer Teil kreisbogenförmig gekrümmt ist, derart, daß der Krümmungsmittelpunkt in der Verwindungsachse 176 liegt. An der Oberseite des Abwälzkurvenflächenkörpers 175 ist die Abwälzkurvenfläche 177 gebildet, auf der die Abwälzrolle 178 abwälzt, die in einem Lagerbock 179, 180 gelagert ist, der seinerseits in einem Querträger 181 gelagert ist, der wiederum seinerseits an einem Unterzuggurt 182 des Aufbaues und an zwei Längsholmen 183 des in den Figuren 20 und 21 nicht weiter dargestellten Aufbaues gelagert ist. Die Abwälzrolle 178 ist mittels eines Lagerzapfens 183 in dem Lagerbock 179, 180 gelagert. Um ein Abheben der Abwälzrolle 178 von der Abwälzkurvenbahn 177 zu verhindern, ist eine zweite Führungsrolle 184 vorgesehen, die mittels eines zweiten Lagerzapfens 185 ebenfalls in dem Lagerbock 179, 180 gelagert ist und unter die Unterseite 186 des Abwälzflächenkörpers 175 greift.

Der Abwälzflächenkörper 175 ist starr mit zwei Lagerrohren 187 verbunden, die in zwei Außenrohren 188 drehbar gelagert sind, wobei diese Außenrohre 188 starr in je einem der Montagerahmenholme 3 und 4 gelagert sind. Je ein Lagerzapfen 189 dient dazu, ein Auseinandergleiten der Rohre 187 und 188 zu vermeiden. Jedes der Rohre 187 ist in jedem der Rohre 188 schwenkbar gelagert, so daß der Abwälzkurvenkörper 175 um die gemeinsame Achse der Zapfen 189 schwenken kann.

Bei der Betrachtung der Erfindung ist folgende Überlegung zugrundezulegen: Auch dann, wenn der Rahmen des Fahrzeuges sich infolge von Abheben eines Hinterrades bei gleichzeitigem Absenken des Hinterrades auf der anderen Fahrzeugseite verwindet, bleibt die Verwindungsachse unverändert. Wenn an der Vorderachse das Rad auf der anderen Fahrzeugseite angehoben wird, wie das angehobene Rad an der Hinterachse, und umgekehrt, das andere Rad der Vorderachse absinkt, bleibt ebenfalls die Verwindungsachse unverändert und in einem Bereich des Rahmens bleibt auch die Lage der beiden Rahmenholme unverändert. Das heißt, eine senkrecht zu den beiden Holmen gezogene gedachte Achse, die die Verwindungsachse schneidet, bleibt in dieser senkrecht zur Fahrzeuglängsachse stehenden Ebene unverändert, mit der Folge, daß in diesem Schnittpunkt auch bei einer derartigen Verwindung des Rahmens die Verwindungsachse und die gedachte Querachse senkrecht aufeinander bleiben, während in allen anderen Punkten des Rahmens nur dann die Kreuzung einer solchen gedachten Querachse mit der Verwindungsachse rechtwinkelig bleibt, wenn das Fahrzeug auf einer horizontalen ebenen Fahrbahn steht, während bei Verwindung des Fahrzeuges in allen anderen Ebenen wie der erstgenannten der Winkel sich gegenüber über dem rechten verändert. Denkt man sich eine mit dem Fahrzeugrahmen starr verbundene Ebene oberhalb der Verwindungsachse, so wird die Mittellinie, die in Normallage des Fahrgestelles auf ebener horizontaler Fahrbahn genau vertikal über der Verwindungsachse liegt, schräggestellt einen Winkel mit der Fahrzeuglängsmittelebene einschließen, mit der Folge, daß diese Mittellinie sich mit zunehmender Entfernung von der zuerst genannten Ebene, in der der Winkel erhalten bleibt, von der Fahrzeuglängsmittelebene versetzt, also ein räumlicher « Versatz » gegeben ist. In dieser erstgenannten Ebene, in dem der rechte Winkel zwischen der Querachse und der Verwindungsachse erhalten bleibt, sollte die Fixierung durch die im mittleren Bereich des Aufbaues vorgesehene Verbindung erfolgen. Normalerweise liegt diese vor dem vorderen Federbock der Hinterachse, weil durch diese Verbindung der Aufbau parallel zum Rahmen fixiert wird, lediglich das geringe Spiel von etwa 1 mm bzw. höchstens wenigen Millimetern, das in den Gummimetallbuchsen ermöglicht ist, aufgenommen wird. Demgegenüber kann mit zunehmendem Abstand von dieser Ebene der Versatz über 10 mm betragen. Der Idealfall wäre, daß der Aufbau kardanisch nur in dem Punkt abgestützt ist, in dem der Winkel zwischen der gedachten Querachse und der Verwindungsachse rechtwinkelig bleibt. Praktisch ist das nicht möglich einerseits, weil in diesem Punkt meistens andere Fahrzeugteile liegen, andererseits, weil die Last über die Länge des Aufbaues an mehreren Punkten abgestützt werden muß, um sie gleichmäßig in den Rahmen einzuleiten.

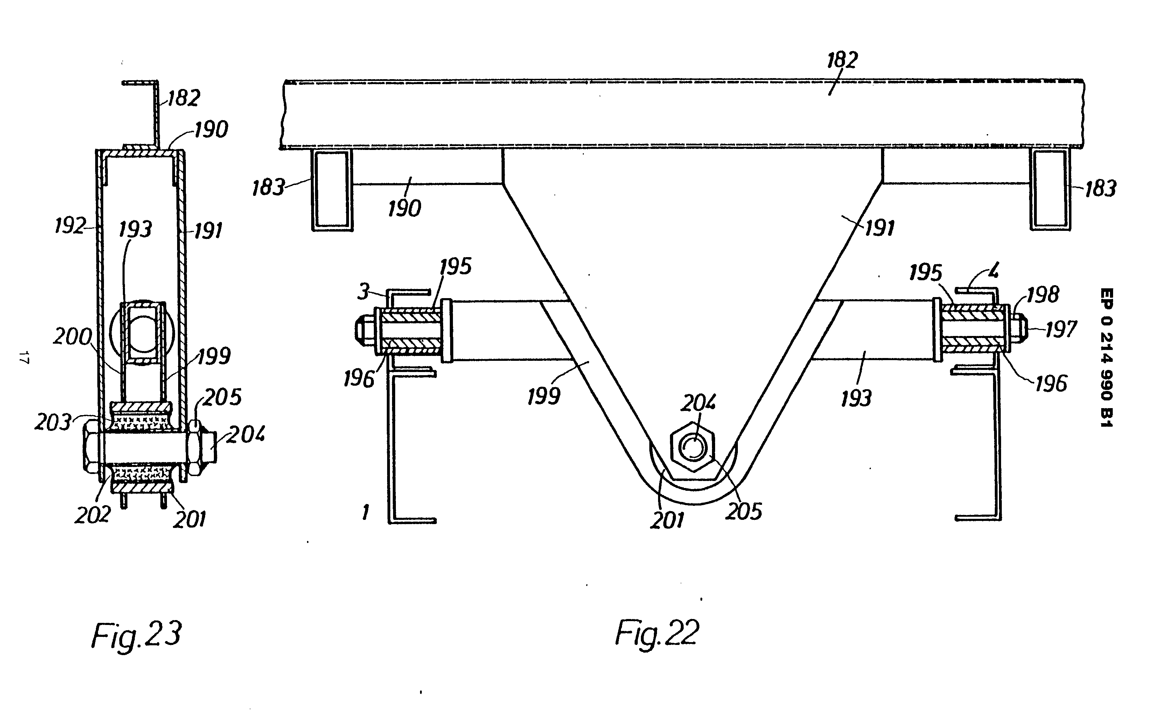

Bei dem in den Figuren 22, 23 dargestellten Abstützorgan sind wiederum die Fahrzeugrahmenholme 1 und 2 und die Montagerahmenholme 3 und 4 und die Aufbauholme 183 und der Unterzuggurt 182 des Aufbaues die gleichen wie in den Figuren 20 und 21. In diesem Fall ist unter den Unterzuggurt 182 ein Querträger 190 mit nach untem offenen U-Profil gesetzt, an den zwei Stützträgerplatten 191 und 192 angesetzt sind. In dem Montagerahmen 3, 4 ist ein Querträger 193 gelagert, wobei wiederum in dem Montagerahmen 3, 4 zwei Lagerrohre 195 befestigt sind, in denen zwei Lagerrohre 196 drehbar gelagert sind, die mit dem Querträger 193 starr verbunden sind. Ein Zuganker 197, der durch Zugankerschrauben 198 festgelegt ist, verbindet diese Konstruktionsteile 193 bis 196 miteinander. An den Querträger 193 sind zwei Stützträgerplatten 199 und 200 befestigt, in denen die Außenbuchse 201 eines Gummimetallagers 201, 202, 203 gelagert ist. Dabei ist mit 202 die elastische Gummipackung und mit 203 das Innenrohr der elastischen Gummimetallagerung 201, 202, 203 bezeichnet, welches auf einem Stützzapfen 204 gelagert ist, der durch eine Mutter 205 fixiert ist. Die Achse des Stützzapfens 204 liegt genau in der Achse der Verwindungsachse. Wenn zum Beispiel infolge Anhebens des rechten Hinterrades und Absinken des linken Hinterrades der Rahmen 1, 2 sich entgegen dem Uhrzeigersinn verdreht, dann erfolgt diese Verdrehung um die Verwindungsachse und damit um die Achse des Stützzapfens 204, das heißt, auch der Querträger 193 schwenkt um die Achse des Zapfens 204, so daß sich seine Mitte auf einem Kreisbogen um die Achse des Zapfens 204 nach links bewegt. Demgegenüber verändern der Träger 190 und der Unterzug 182 ihre Lage nicht. Da der Fahrzeugaufbau und damit die Längsholme 183 durch die im mittleren Bereich des Aufbaues angeordnete Verbindung festgehalten werden und damit in einem Bereich, in dem der Fahrzeugrahmen seine Lage nicht ändert, werden auch die Längsholme 183 des verwindungssteifen Aufbaues festgehalten.

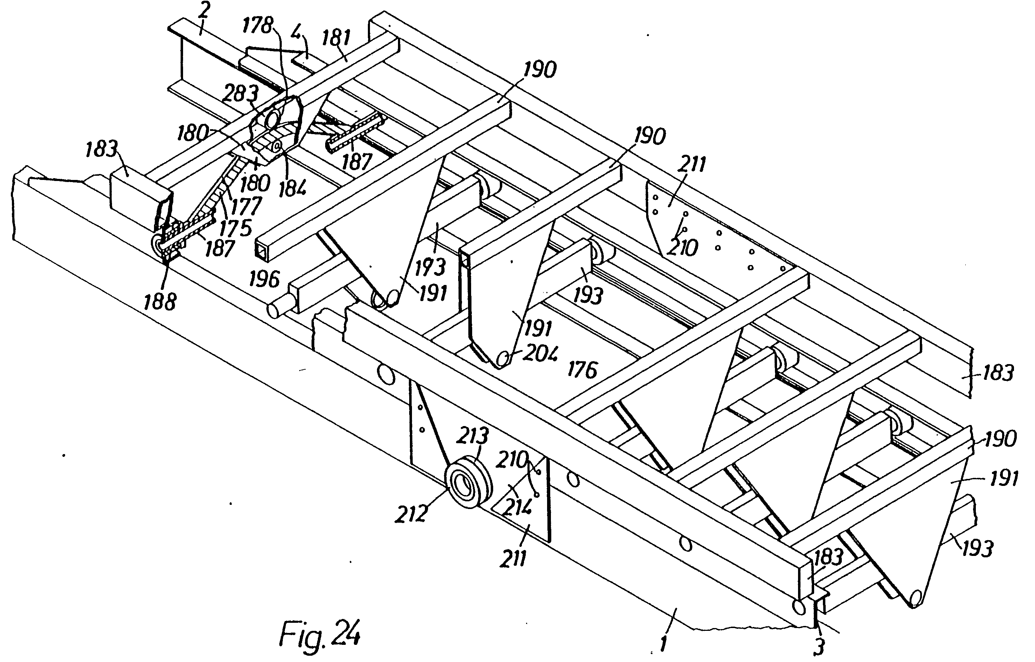

In der perspektivischen, teilweise geschnittenen Darstellung gemäß Figur 24 ist eine Konstruktion dargestellt, bei der im vorderen Bereich des Aufbaues Abstützorgane mit Abwälzrollen 178 gemäß den Figuren 20 und 21 angeordnet sind und in dem der im mittleren Bereich des Aufbaues angeordneten Verbindung benachbarten Bereich Abstützorgane gemäß den Figuren 22 und 23. Dabei ist zu erkennen, daß die Aufbaulängsholme 183 bei beiden Formen der Abstützorgane immer um die Verwindungsachse 176 schwenken.

Das Abstützen des Aufbaues schwenkbar um die Verwindungsachse 176 ist somit ein wesentlicher Grundgedanke der Erfindung.

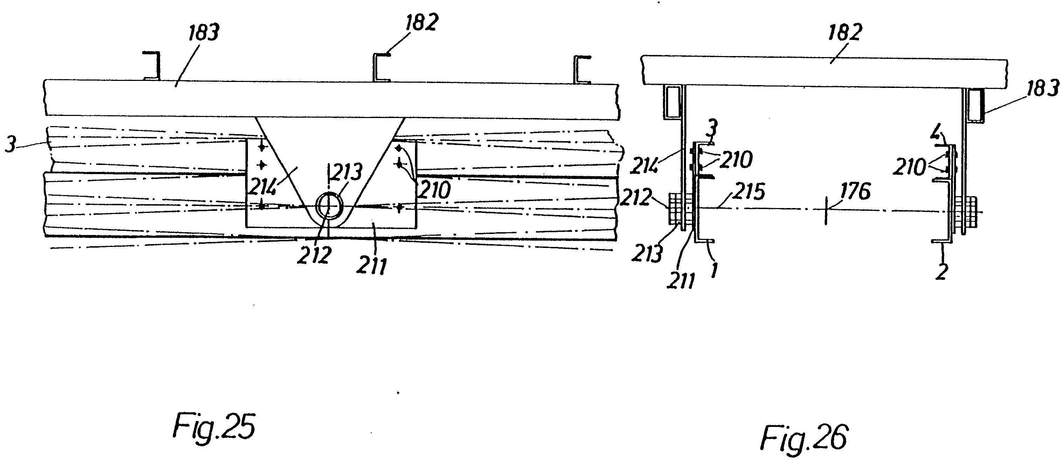

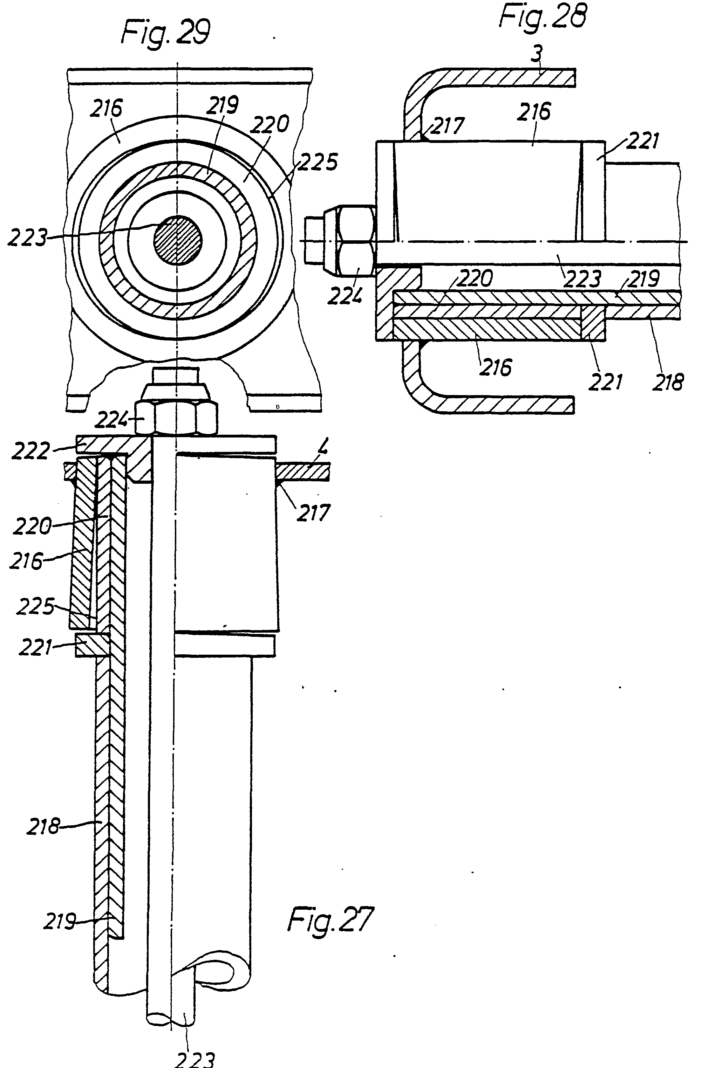

Dieser Grundgedanke wird auch fortgesetzt in der Ausgestaltung der im mittleren Bereich des Aufbaues angeordneten Verbindung zwischen Rahmen und Aufbau, die Vertikalkräfte und Längsschubkräfte aufnehmen soll. Diese ist in den Figuren 25 und 26 näher dargestellt.

Mit den Holmen 3 und 4 des Montagerahmens, in den die Lastkräfte eingeleitet werden sollen, ist durch Schrauben 210 eine Tragplatte 211 verbunden, mit der starr ein Stützzapfen 212 verbunden ist. Drehbar auf diesem Stützzapfen 212 ist ein Stützrohr 213 gelagert, welches starr mit einer Tragstützplatte 214 verbunden ist, die ihrerseits starr mit jeweils einem der Aufbaulängsholme 183 verbunden ist. Das Wesentliche dabei ist, daß die gemeinsame Achse 215 der koaxial zueinander angeordneten Stützzapfen 212 die Verwindungsachse 176 schneidet, das heißt, in der Ebene, in der sowohl die Achse 215 als auch die Verwindungsachse 176 liegt, ändert sich der rechte Winkel zwischen den Achsen 215 und 176 nicht. In Figur 25 sind dünn ausgezogen bzw. strichpunktiert noch Lagen der Kanten der Holme 1 und 3 dargestellt, die diese bei verwundener Lage des Rahmens 1, 2 einnehmen.

In den Figuren 27 bis 28 ist eine Lagerung einer Quertraverse, die sich gegenüber dem Montagerahmen verschwenken kann, dargestellt und zwar in Figur 27 im Horizontalschnitt und in Figur 28 im Vertikalschnitt. Dabei ist zu berücksichtigen, daß bei Verdrillung des Rahmens der Abstand der Holme 1, 2 des Rahmens voneinander sowie der Abstand der Holme des Montagerahmens 3, 4 sich nicht verändern soll. Wird in Normallage des Rahmens an einem beliebigen, vom Fixierungspunkt entfernten Punkt eine gedachte Querachse, die senkrecht auf den Holmen 3, 4 steht, gedacht, so schneidet diese die Holme 3, 4 an zwei bestimmten Punkten. Verwindet sich jetzt der Rahmen und wird eine neue gedachte Linie zwischen diesen beiden Schnittpunkten gezogen, so steht diese gedachte Linie nicht mehr senkrecht auf den Holmen des Montagerahmens. Diese Winkeländerung muß berücksichtigt werden, wenn bei einer Lagerung einer schwenkbaren Quertraverse das Drehlager gestaltet wird. Andererseits sollen aber die Vertikalkräfte auf einer möglichst großen Fläche übertragen werden. Mit den Holmen 3 und 4 ist je eine Lagerbuchse 216 durch Schweißnähte 217 starr verbunden. In diesen Buchsen 216 soll die Quertraverse 218, die also beispielsweise der Quertraverse 193 entsprechen kann, gelagert werden. Zu diesem Zweck ist ein inneres Lagerrohr 219 vorgesehen, welches in dem Zwischenstützrohr 220 gelagert ist, welches gleichzeitig zusammen mit dem Ring 221 als Distanzstück dient. Auf beiden Seiten ist je eine Stirnplatte 222 vorgesehen und die beiden Stirnplatten 222 sind durch einen Zuganker 223 und durch Muttern 224 miteinander verbunden. Die Innenbohrung der Rohrbuchse 216 ist auf der jeweils äußeren Seite, in der der Montageholm 3 bzw. 4 befestigt ist, kreiszylindrisch, weitet sich aber von dort aus oval auf, so daß an der nach innen gerichteten Seite der Rohrbuchse 216 in der horizontalen Ebene die Innenbohrungswand 225 im horizontalen Schnitt konisch verläuft, derart daß der Querschnitt senkrecht zur Achse an der inneren Mündung aus zwei Halbkreisen und zwei dazwischen liegenden, zueinander parallelen Wandstücken gebildet ist. Demgegenüber verlaufen im axialen vertikalen Schnitt die Wände parallel zueinander. Dadurch wird in der Horizontalen eine Winkelbeweglichkeit ermöglicht, die ein Nachgeben ermöglicht, ohne das Innenrohr 219 oder den Zuganker 223 auf Biegung zu beanspruchen, während im Vertikalschnitt das Rohr 219 in der vollen Länge in dem Rohr 220 geführt ist. Diese Ausgestaltungsform kann sowohl für die Abwälztraversen wie auch für die verschwenkbar gelagerten Quertraversen vorgesehen sein und dient in jedem Fall zur Abstandhalterung der Montagerahmenholme voneinander.

Diese Konstruktion ist sowohl bei dem Verdrillungsachsendrehlagersystem wie auch bei dem Abwälzsystem anwendbar. In der Zeichnung ist eine Konstruktion mit Rohrteilen dargestellt. Statt dessen können auch Drehteile verwendet werden. Es ist deutlich zu erkennen, daß die in dieser Konstruktion gelagerte Traverse sich im Lager sowohl drehen, also verschwenken kann, als auch die Winkeländerungen zwischen dem Montagerahmenholmen zuläßt, ohne Zwängungsbeanspruchung des durchgehenden Rohres bzw. Zugankers. Bei den Abwälztraversen sind die Rohre kurz und links und rechts zwischen U-Traversen eingeschweißt, um die Abwälzkurve von den Ankerschrauben freizuhalten.

## Patentansprüche

1. Mehrachsiges Kraftfahrzeug mit einem verwindungsweichen Rahmen (1, 2), vorzugsweise einem Rahmen (1, 2), mit dem ein aufgesetzter Montagerahmen (3, 4) verbunden ist, und einem auf den Rahmen (1, 2) mittels Abstützorganen (5, 6 bzw. 175, 177, 178) abgestützten, wenig verwindungsfähigen Aufbau (8), wobei im mittleren Bereich der Längserstreckung des Aufbaues (8) zwischen diesem und dem Rahmen (1, 2) eine Vertikalkräfte und Längskräfte nachgiebig aufnehmende, Relativbewegungen zwischen Rahmen (1, 2) und Aufbau (8) nur beschränkt zulassende Verbindung (24, 25, 26, 27, 28, 29) vorgesehen ist und mindestens ein Abstützorgan (5, 6 bzw. 175, 177, 178) in mindestens einem weiteren, in Fahrzeuglängsrichtung versetzten Bereich angeordnet ist und in mindestens einem Bereich des Aufbaues (8) zwischen diesem und dem Rahmen (1, 2) eine Querkräfte aufnehmende Seitenschubstützverbindung (38, 39, 40 bzw. 170) vorgesehen ist, dadurch gekennzeichnet, daß das in einem weiteren Bereich angeordnete Abstützorgan (5, 6, 175, 177, 178) an mindestens einem Ende des Aufbaues (8) angeordnet ist und eine bogenförmige, mit dem Rahmen (1, 2) verbundene Abwälzkurvenfläche (5, 177), deren Krümmungsachse zumindest annähernd koaxial zur Verwindungsachse (20, 176) des Rahmens (1, 2) liegt, aufweist und daß die Seitenschubstützverbindung (74, 39) auf die Bewegungsfreiheit des Abstützorganes (5, 6 bzw. 175, 177, 178) abgestimmt ist.

2. Kraftfahrzeug nach Anspruch 1, dadurch gekennzeichnet, daß über die Längsrichtung des Aufbaues verteilt an mehreren Stellen desselben jeweils ein Abstützorgan (5, 6 bzw. 175, 176, 178) angeordnet ist.

3. Kraftfahrzeug nach Anspruch 2, dadurch gekennzeichnet, daß alle Abstützorgane (5, 6 bzw. 175, 176, 177) im Aufbauprinzip untereinander gleich sind.

4. Kraftfahrzeug nach Anspruch 1, dadurch gekennzeichnet, daß die bogenförmige Abwälzkurvenfläche (5 bzw. 177) kreisbogenförmig ist.

5. Kraftfahrzeug nach Anspruch 1, dadurch gekennzeichnet, daß die bogenförmige Abwälzkurvenfläche (5 bzw. 177) starr mit dem Rahmen (1, 2) verbunden ist.

6. Kraftfahrzeug nach Anspruch 1, dadurch gekennzeichnet, daß eine der Abwälzflächen (5 oder 6 bzw. 175) gegenüber dem zugeordneten Bauteil (1, 2 bzw. 8) um eine zur Fahrzeuglängsmittelebene senkrechte Achse schwenkbar ist.

7. Kraftfahrzeug nach Anspruch 6, dadurch gekennzeichnet, daß die Abwälzkurvenfläche (5 bzw. 177) auf einem Träger (175) angeordnet ist, der beiderseits zumindest beschränkt verdrehbar in dem Montagerahmen (3, 4) gelagert ist.

8. Kraftfahrzeug nach Anspruch 1, dadurch gekennzeichnet, daß die Abwälzkurvenfläche (5 bzw. 177) an der Oberseite einer im mittleren Bereich nach oben gewölbten Querstrebe (108, 175) gebildet ist.

9. Kraftfahrzeug nach Anspruch 1, dadurch gekennzeichnet, daß die Seitenschubstützverbindung (39) in Längserstreckung des Rahmens (1, 2) einem Abstützorgan (5, 6) benachbart angeordnet ist.

10. Kraftfahrzeug nach Anspruch 1, dadurch gekennzeichnet, daß auf der bogenförmigen Abwälzkurvenfläche (5) eine zumindest annähernd ebene Abwälzfläche (6) abwälzend abgestützt ist.

11. Kraftfahrzeug nach Anspruch 10, dadurch gekennzeichnet, daß benachbart der Abwälzkurvenfläche (5) und der Abwälzfläche (6) ein Andrückorgan (74) angeordnet ist.

12. Kraftfahrzeug nach Anspruch 11, dadurch gekennzeichnet, daß das Andrückorgan aus einem Zugankerzapfen (74, 73, 75) gebildet ist, der durch je eine Bohrung der Abwälzkurvenfläche (5) und der Abwälzfläche (6) hindurchgeführt ist und durch eine vorgespannte Feder (72, 76) sowohl gegen das die Abwälzkurvenfläche (5) tragende Bauteil wie gegen das die Abwälzfläche (6) tragende Bauteil abgestützt ist.

13. Kraftfahrzeug nach Anspruch 1, dadurch gekennzeichnet, daß auf der bogenförmigen Abwälzkurvenfläche (177) eine mit dem Aufbau (8) verbundene Abwälzstützrolle (178) abgestützt ist.

14. Kraftfahrzeug nach Anspruch 13, dadurch gekennzeichnet, daß die bogenförmige Abwälzkurvenfläche (177) an der Oberseite eines bogenbügelförmigen Trägers (175), dessen Oberseite und Unterseite parallel zueinander verlaufen, gebildet ist und daß parallel zu der Abwälzstützrolle (178) eine Rückhalterolle (184) mit dem Aufbau (8) verbunden ist.

15. Kraftfahrzeug nach Anspruch 1, dadurch gekennzeichnet, daß die Seitenschubstützeinrichtung aus einem Lenker (39) gebildet ist, der durch ein Gelenk, dessen Achse parallel zur Fahrzeuglängsachse angeordnet ist, mit dem Rahmen (1, 2) verbunden ist und durch ein zweites Gelenk (38), dessen Achse parallel zu der Achse des ersten Gelenkes (40) angeordnet ist, mit dem Aufbau (8) verbunden ist, wobei das Gelenk (38) zwischen Querlenkerschubstange (39) und Aufbau (8) an einem im Aufbau (8) befestigten Ausleger (37) befestigt und in der Nähe der Abwälzkurvenfläche (5) derart angeordnet ist, daß bei Abwälzen der Abwälzfläche (6) auf der Abwälzkurvenfläche (5) die Achse des Gelenks (38) zwischen Querlenker (39) und Aufbau (8) einen Kreisbogen um die Achse des mit dem Rahmen (1, 2) verbundenen Gelenks (40) beschreibt.

16. Kraftfahrzeug nach Anspruch 15, dadurch gekennzeichnet, daß das Gelenk (40) zur Verbindung zwischen Rahmen (1, 2) und Querlenkerschubstange (39) im Holm eines Montagerahmens (3, 4) angeordnet ist, dessen einer Schenkel mit dem oberen Schenkel eines Holms des Rahmens (1, 2) verbunden ist.

17. Kraftfahrzeug nach Anspruch 1, dadurch gekennzeichnet, daß als Seitenschubstützverbindung ein Paar von Zugorganen (170) vorgesehen ist, von denen das eine einerseits an der linken Seite des Aufbaues (8) und andererseits unmittelbar oder mittelbar am rechten Holm (2) des Rahmens angeschlagen ist und das andere an der rechten Seite des Aufbaues (8) und am linken Holm (1) des Rahmes angeschlagen ist, wobei das Zugorgan (170) über eine Stützfläche (169) gelegt ist, die neben der Abwälzkurvenbahn (5) derart angeordnet ist, daß die neutrale Faser des Zugorgans (170) zwischen Anschlagpunkt am Rahmen (1, 2) und Berührungspunkt der Abwälzflächen (5, 6) miteinander neben der Oberfläche der Abwälzkurvenbahn (5) liegt.

18. Kraftfahrzeug nach Anspruch 1 oder vorzugsweise nach Anspruch 13, dadurch gekennzeichnet, daß eine mit dem Aufbau starr verbundene Stütze (191, 192) vorgesehen ist, die um eine zumindest annähernd koaxial zur Verwindungsachse (176) an einem Querträger (193) angeordnete Stützachse (204) schwenkbar ist.

19. Kraftfahrzeug nach Anspruch 18, dadurch gekennzeichnet, daß die Stützachse (204) an einem Hängebock (199, 200) angeordnet ist, der an einem quer zur Fahrzeuglängsmittelebene angeordneten Querträger (193) aufgehängt ist.

20. Kraftfahrzeug nach Anspruch 19, dadurch gekennzeichnet, daß der Hängebock (199, 200) um eine zur Fahrzeuglängsmittelebene senkrechte Achse schwenkbar ist.

21. Kraftfahrzeug nach Anspruch 1, dadurch gekennzeichnet, daß die im mittleren Bereich des Aufbaues (8) angeordnete Verbindung zwischen Aufbau (8) und Rahmen (1, 2) als aus auf jeder Seite mindestens zwei Verbindungslaschen (24, 28) bestehende Längsschubstützverbindung ausgestaltet ist, wobei jede der Verbindungslaschen durch ein Schwenkgelenk, dessen Achse senkrecht zur Fahrzeuglängsmittelebene steht, mit dem Rahmen (1, 2) und durch ein zweites Schwenkgelenk mit zur Achse des ersten Schwenkgelenkes paralleler Achse mit dem Aufbau (8) verbunden ist, wobei in Normallage die gedachten Verbindungslinien, die jeweils durch beide Gelenkachsen einer Verbindungslasche (24 bzw. 28) gehen, sich zumindest annähernd in einem Punkt schneiden, der rahmenseitig im Abstand von allen Verbindungslaschen (24 bzw. 28) liegt und daß alle Schwenkgelenke als kraftübertragend im begrenzten Bereich Verlagerungen zwischen Schwenkachse und zugeordnetem Bauteil zulassendes elastisches Gelenk ausgestaltet sind.

22. Kraftfahrzeug nach Anspruch 21, dadurch gekennzeichnet, daß eine ungerade Anzahl von Verbindungslaschen (24, 25, 26, 27, 28, 29, 123, 124, 125, 134, 145, 143, 144, 146) vorgesehen ist.

23. Kraftfahrzeug nach Anspruch 21, dadurch gekennzeichnet, daß jedes Gelenk eine Gummimetallbuchse (149, 150, 151) als Lagerung für den Gelenkzapfen aufweist.

24. Kraftfahrzeug nach Anspruch 22, dadurch gekennzeichnet, daß alle Schwenkachsen für jeweils eine Verbindungslasche (24, 25, 26, 27, 28, 29) im Rahmen (1, 2) bzw. Montagerahmen (3, 4) und bzw. oder alle Schwenkachsen am Aufbau (8) jeweils zumindest annähernd auf einer gedachten, parallel zur Fahrzeuglängsachse verlaufenden geraden Linie angeordnet sind.

25. Kraftfahrzeug nach Anspruch 21, dadurch gekennzeichnet, daß die Verbindungslaschen (123, 124, 125, 133, 134, 135, 143, 144, 145, 146) der Längsschubstützverbindung derart angeordnet sind, daß in Normallage die gedachten Verbindungslinien, die jeweils durch die beiden Gelenkachsen jeweils einer Verbindungslasche (123, 124, 125, 133, 134, 135, 143, 144, 145, 146) gehen, sich zumindest annähernd in einem Punkt schneiden, der in Abstand von allen Verbindungslaschen (123, 124, 125, 133, 134, 135, 143, 144, 145, 146) liegt, und daß alle Schwenkgelenke als kraftübertragend in begrenztem Bereich Verlagerungen zwischen Schwenkachse und zugeordnetem Bauteil zulassendes Gelenk ausgestaltet sind, wobei jedes Gelenk eine Gummimetallbuchse (149, 150, 151) aufweist, wobei alle Schwenkachsen im Rahmen (1 bzw. 130, 131) und/oder alle Schwenkachsen am Aufbau (8) jeweils zumindest annähernd auf einer gedachten geraden Linie angeordnet sind.

26. Kraftfahrzeug nach Anspruch 25, dadurch gekennzeichnet, daß der Schnittbereich bzw. Schnittpunkt, in dem sich alle Verbindungslinien (129) schneiden, auf der Rahmenseite der Verbindungslaschen (123, 124, 125, 133, 134, 135, 143, 144, 145, 146) zumindest annähernd in der Ebene liegt, in der die Verwindungsachse (176) liegt.

27. Kraftfahrzeug nach Anspruch 25, dadurch gekennzeichnet, daß in in Längsrichtung des Fahrzeuges gesehenem Abstand von der aus der Laschenanordnung (123, 124, 125, 133, 134, 135, 143, 144, 145, 146) bestehenden Längsschubstützverbindung ein Vertikalkraftaufnahmeorgan zwischen Rahmen (1, 2) und Aufbau (8) angeordnet ist.

28. Kraftfahrzeug nach Anspruch 25, dadurch gekennzeichnet, daß die Längsschubstützverbindung (123, 124, 125, 133, 134, 135, 143, 144, 145, 146) in einem Bereich des Fahrzeuges angeordnet ist, in dem nur geringe Änderungen des Abstandes zwischen Rahmen (1, 2) und Aufbau (8) zu erwarten bzw. zugelassen sind.

29. Kraftfahrzeug nach Anspruch 1, dadurch gekennzeichnet, daß die im mittleren Bereich angeordnete Längsschubstützverbindung zwischen Rahmen (1, 2) und Aufbau (8) zwei mit dem Aufbau (8, 183) starr verbundene Stützen (214) aufweist, die mit je einem mit dem Fahrzeugrahmen (1, 2) starr verbundenen Stützzapfen (212) schwenkbar verbunden sind, wobei die Schwenkachsen der beiden Stützzapfen (211) koaxial zueinander die Verwindungsachse (176) zumindest annähernd schneidend angeordnet sind.

30. Kraftfahrzeug nach einem der vorangegangenen Ansprüche mit einer die beiden Holme des Montagerahmens verbindenden Quertraverse, dadurch gekennzeichnet, daß auf der Quertraverse (223, 219) ein Querträger schwenkbar gelagert ist und daß die Verbindung zwischen der Quertraverse (213, 219) mit jeweils einem Holm (3 bzw. 4) des Montagerahmens in vertikaler Richtung starr, in horizontaler Richtung nachgiebig gestaltet ist.

**Claims**

1. A multi-axle motor vehicle comprising a frame (1, 2) which is easily twisted, preferably a frame (1, 2) to which a superimposed assembly frame (3, 4) is connected, and a body (8) which is supported on the frame (1, 2) by means of supporting elements (5, 6 and 175, 177, 178) and which is largely resistant to torsion, where, in the central region of the longitudinal direction of the body (8), between the latter and the frame (1, 2) there is arranged a link (24, 25, 26, 27, 28, 29) which resiliently absorbs vertical forces and longitudinal forces and permits relative movements between the frame (1, 2) and the body (8) only to a limited extent and where at least one supporting element (5, 6 and 175, 177, 178) is arranged in at least one further region offset in the longitudinal direction of the vehicle and in at least one region of the body (8), between the latter and the frame (1, 2) there is arranged a lateral thrust support link (38, 39, 40 and 170) which absorbs transverse forces, characterised in that the supporting element (5, 6, 175, 177, 178) arranged in a further region is located at least one end of the body (8) and has an arc-shaped curved rolling surface (5, 177) which is connected to the frame (1, 2) and whose axis of curvature is at least approximately coaxial with the torsion axis (20, 176) of the frame (1, 2) and that the lateral thrust support link (74, 39) is adapted to the freedom of movement of the supporting element (5, 6 and 175, 177, 178).

2. A motor vehicle as claimed in Claim 1, characterised in that a supporting element (5, 6 and 175, 176, 178) is in each case arranged at several locations distributed along the longitudinal direction of the body.

3. A motor vehicle as claimed in Claim 2, characterised in that all the supporting elements (5, 6 and 175, 176, 177) are identical in respect of their construction.

4. A motor vehicle as claimed in Claim 1, characterised in that the curved rolling surface (5 ; 177) has the shape of an arc of a circle.

5. A motor vehicle as claimed in Claim 1, characterised in that the arc-shaped curved rolling surface (5 ; 177) is rigidly connected to the frame (1, 2).

6. A motor vehicle as claimed in Claim 1, characterised in that one of the rolling surfaces (5 or 6 ; 175) is pivotable in relation to the assigned component (1, 2 ; 8) about an axis perpendicular to the longitudinal central plane of the vehicle.

7. A motor vehicle as claimed in Claim 6, characterised in that the curved rolling surface (5 ; 177) is arranged on a carrier (175) which is mounted on both sides so as to be rotatable at least to a limited extent in the assembly frame (3, 4).

8. A motor vehicle as claimed in Claim 1, characterised in that the curved rolling surface (5 ; 177) is formed on the upper side of a transverse strut (108, 175) which is curved upwardly in its central zone.

9. A motor vehicle as claimed in Claim 1, characterised in that the lateral thrust support link (39) is arranged in the longitudinal dimension of the frame (1, 2) adjacent to a supporting element (5, 6).

10. A motor vehicle as claimed in Claim 1, characterised in that an at least approximately flat rolling surface (6) is supported in rolling fashion on the arc-shaped curved rolling surface (5).

11. A motor vehicle as claimed in Claim 10, characterised in that a pressure element (74) is arranged adjacent to the curved rolling surface (5) and the rolling surface (6).

12. A motor vehicle as claimed in Claim 11, characterised in that the pressure element is formed by a tie rod journal (74, 73, 75) which in each case passes through a bore in the curved rolling surface (5) and the rolling surface (6) and is supported by a biassed spring (72, 76) both against the component which carries the curved rolling surface (5) and against the component which carries the rolling surface (6).

13. A motor vehicle as claimed in Claim 1, characterised in that a rolling support roller (178) connected to the body (8) is supported on the arc-shaped curved rolling surface (177).

14. A motor vehicle as claimed in Claim 13, characterised in that the arc-shaped curved rolling surface (177) is formed on the upper side of an arched bow shaped carrier (175) whose upper side and under side extend in parallel and that parallel to the rolling support roller (178), a retaining roller (184) is connected to the body (8).

15. A motor vehicle as claimed in Claim 1, characterised in that the lateral thrust support device is formed by a guide (39) which is connected to the frame (1, 2) by an articulation whose axis extends parallel to the longitudinal axis of the vehicle and is connected to the body (8) by a second articulation (38) whose axis extends parallel to the axis of the first articulation (40), where the articulation (38) is attached, between the transverse guidance thrust rod (39) and the body (8), to an arm (37) attached in the body (8) and is arranged in the vicinity of the curved rolling surface (5) in such manner that when the rolling surface (6) rolls on the curved rolling surface (5) the axis of the articulation (38) between the transverse guide (39) and the body (8) describes a circular arc about the axis of the articulation (40) which is connected to the frame (1, 2).

16. A motor vehicle as claimed in Claim 15, characterised in that the articulation (40) which provides a link between the frame (1, 2) and the transverse guidance thrust rod (39) is arranged in the spar of an assembly frame (3, 4), one flank of which is connected to the upper flank of a spar of the frame (1, 2).

17. A motor vehicle as claimed in Claim 1, characterised in that the lateral thrust support link consists of a pair of traction elements (170), one of which is attached on the one hand to the left-hand side of the body (8) and on the other hand either directly or indirectly to the right-hand spar (2) of the frame, and the other of which is attached to the right-hand side of the body (8) and to the left-hand spar (1) of the frame, where the traction element (170) is positioned over a supporting surface (169) which is arranged beside the curved rolling path (5) in such manner that the neutral axis of the traction element (170) is located between the attachment point to the frame (1, 2) and the point of contact of the rolling surfaces (5, 6) with one another beside the surface of the curved rolling path (5).

18. A motor vehicle as claimed in Claim 1 or preferably Claim 13, characterised in that a support (191, 192) is provided which is rigidly connected to the body and which is pivotable about a support axle (204) arranged so as to be at least approximately coaxial with the torsion axis (176) on a transverse carrier (193).

19. A motor vehicle as claimed in Claim 18, characterised in that the support axle (204) is arranged on a suspended bracket (199, 200) which is suspended on a transverse carrier (193) arranged transversely to the longitudinal central plane of the vehicle.

20. A motor vehicle as claimed in Claim 19, characterised in that the suspended bracket (199, 200) is pivotable about an axis at right angles to the longitudinal central plane of the vehicle.

21. A motor vehicle as claimed in Claim 1, characterised in that the link between the body (8) and frame (1, 2) arranged in the central region of the body (8) is in the form of a longitudinal thrust support link which consists of at least two connecting straps (24, 28) on each side, where each of the connecting straps is connected to the frame (1, 2) by a swivel articulation whose axis extends at right angles to the longitudinal central plane of the vehicle and to the body (8) by a second swivel articulation whose axis is parallel to the axis of the first swivel articulation, where, in the normal position, the imaginary connecting lines which each extend through the two articulation axes of a connecting strap (24 ; 28) intersect at least approximately at a point located on the side of the frame at a distance from all the connecting straps (24 ; 28) and that all the swivel articulations consist of an elastic articulation which permits displacements between the swivel axle and the assigned component in force-transmitting fashion in the limited region.

22. A motor vehicle as claimed in Claim 21, characterised in that an odd number of connecting straps (24, 25, 26, 27, 28, 29, 123, 124, 125, 134, 145, 143, 144, 146) is provided.

23. A motor vehicle as claimed in Claim 21, characterised in that each articulation possesses a rubber-metal bushing (149, 150, 151) as bearing for the articulation pin.

24. A motor vehicle as claimed in Claim 22, characterised in that all the swivel axes for each connecting strap (24, 25, 26, 27, 28, 29) in the frame (1, 2) or assembly frame (3, 4) and/or all the swivel axes on the body (8) are arranged at least approximately on an imaginary straight line extending parallel to the longitudinal axis of the vehicle.

25. A motor vehicle as claimed in Claim 21, characterised in that the connecting straps (123, 124, 125, 133, 134, 135, 143, 144, 145, 146) of the longitudinal thrust support link are arranged in such manner that in the normal position the imaginary connecting lines which each pass through the two articulation axes of a connecting strap (123, 124, 125, 133, 134, 135, 143, 144, 145, 146) intersect at least approximately at a point which is located at a distance from all the connecting straps (123, 124, 125, 133, 134, 135, 143, 144, 145, 146) and that all the swivel articulations are in the form of an articulation which permits displacements between the swivel axis and the assigned component in force-transmitting fashion in a limited region, where each articulation comprises a rubber-metal bushing (149, 150, 151), and where all the swivel axes in the frame (1 ; 130, 131) and/or all the swivel axes on the body (8) are arranged at least approximately on an imaginary straight line.

26. A motor vehicle as claimed in Claim 25, characterised in that the intersection area or intersection point at which all the connecting lines (129) intersect is located on the frame side of the connecting straps (123, 124, 125, 133, 134, 135, 143, 144, 145, 146) at least approximately in the plane in which the torsion axis (176) is located.

27. A motor vehicle as claimed in Claim 25, characterised in that a vertical force absorbing element is arranged between the frame (1, 2) and the body (8) at a distance, considered in the longitudinal direction of the vehicle, from the longitudinal thrust support link which consists of the strap arrangement (123, 124, 125, 133, 134, 135, 143, 144, 145, 146).

28. A motor vehicle as claimed in Claim 25, characterised in that the longitudinal thrust support link (123, 124, 125, 133, 134, 135, 143, 144, 145, 146) is arranged in a region of the vehicle in which only slight changes in the distance between the frame (1,2) and the body (8) are likely or permitted.

29. A motor vehicle as claimed in Claim 21, characterised in that the longitudinal thrust support link between frame (1,2) and body (8), arranged in the central region, comprises two supports (214) which are rigidly connected to the body (8, 183) and which are each pivotably connected to a pivot journal (212), itself rigidly connected to the vehicle frame (1, 2), where the swivel axes of the two pivot journals (211) are arranged coaxially with one another, at least approximately intersecting the torsion axis (176).

30. A motor vehicle as claimed in one of the preceding Claims comprising a cross-member which connects the two spars of the assembly frame, characterized in that a transverse carrier is mounted so as to be pivotable on the cross-member (223, 219) and that the connection between the cross-member (213, 219) and a respective spar (3 ; 4) of the assembly frame is contrived to be rigid in the vertical direction but flexible in the horizontal direction.


## Revendications

1. Véhicule automobile à plusieurs essieux comportant un châssis (1, 2) souple en torsion, de préférence un châssis (1, 2) auquel est relié un cadre de montage rapporté (3, 4) et une superstructure (8) peu sensible au gauchissement et supportée sur le châssis (1, 2) à l'aide d'organes de support (5, 6 ou 175, 177, 178), une liaison (24, 25, 26, 27, 28, 29) qui ne permet que de faibles mouvements relatifs entre le châssis (1, 2) et la superstructure (8) et qui supporte de façon souple les forces verticales et longitudinales étant prévue dans la partie médiane de la zone allongée de la superstructure (8) entre celle-ci et le châssis (1, 2) et dans lequel au moins un organe de support (5, 6 ou 175, 177, 178) est ménagé dans au moins une autre zone décalée dans la direction longitudinale du véhicule et une liaison de protection contre le déplacement latéral (38, 39, 40 et 170) est prévue qui supporte les forces obliques et qui se trouve dans au moins une zone de la superstructure située entre la zone précitée et le châssis (1, 2) caractérisé en ce que l'organe de support (5, 6, 175, 177, 178) ménagé dans une autre zone est monté au moins à une extrémité de la superstructure (8) et présente une surface de roulement incurvée (5, 177) en forme d'arc reliée au châssis (1, 2) et dont l'axe de courbure est situé au moins de façon sensiblement coaxiale à l'axe de torsion (20, 176) du châssis (1, 2) et en ce que la liaison d'appui contre le cisaillement latéral (74, 39) est adaptée à la liberté de déplacement de l'organe de support (5, 6 ou 175, 177, 178).

2. Véhicule automobile selon la revendication 1, caractérisé en ce qu'un organe de support (5, 6 et 175, 176, 178) est posé le long de la direction longitudinale de la superstructure à plusieurs emplacements de celle-ci.

3. Véhicule automobile selon la revendication 1, caractérisé en ce que tous les organes de support (5, 6 ou 175, 176, 177) sont identiques en ce qui concerne leur principe de superposition.

4. Véhicule automobile selon la revendication 1, caractérisé en ce que la surface de roulement incurvée en forme d'arc (5 ou 177) est en forme d'arc de cercle.

5. Véhicule automobile selon la revendication 1, caractérisé en ce que la surface de roulement incurvée en forme d'arc (5 ou 177) est rigidement reliée au châssis.

6. Véhicule automobile selon la revendication 1, caractérisé en ce que l'une des surfaces de roulement (5 ou 6 et 175) peut osciller autour d'un axe perpendiculaire au plan longitudinal médian du véhicule par rapport aux composants correspondants (1, 2 ou 8).

7. Véhicule automobile selon la revendication 6, caractérisé en ce que la surface de roulement incurvée (5 ou 177) est disposée sur un support (175) qui repose sur le châssis de montage (3, 4) avec possibilité de tourner de façon limitée au moins des deux côtés.

EP 0 214 990 B1

8. Véhicule automobile selon la revendication 1, caractérisé en ce que la surface de roulement incurvée (5 ou 177) est constituée sur la face supérieure d'une entretoise transversale (108, 175) cintrée vers le haut dans sa partie médiane.

9. Véhicule automobile selon la revendication 1, caractérisé en ce que la liaison d'appui contre le cisaillement latéral (39) est disposée dans le sens longitudinal du châssis (1, 2) au voisinage d'un organe de support (5, 6).

10. Véhicule automobile selon la revendication 1, caractérisé en ce qu'une surface de roulement (6) qui est au moins approximativement plane, est supporté à roulement sur la surface de roulement incurvée (5) en forme d'arc.

11. Véhicule automobile selon la revendication 10, caractérisé en ce qu'un organe de pression (74) est disposé au voisinage de la surface de roulement incurvée (5) et de la surface de roulement (6).

12. Véhicule automobile selon la revendication 11, caractérisé en ce que l'organe de pression est constitué d'un boulon formant tirant (74, 73, 75) qui traverse de part en part un alésage de la surface de roulement incurvée (5) et de la surface de roulement (6) et qui est en appui, par l'intermédiaire d'un ressort pré-contraint (72, 76) sur le composant portant la surface de roulement incurvée (5) et sur le composant portant la surface de roulement (6).

13. Véhicule automobile selon la revendication 1, caractérisé en ce qu'un rouleau de roulement de support (178) relié à la superstructure (8) s'appuie sur la surface de roulement incurvée (177).

14. Véhicule automobile selon la revendication 13, caractérisé en ce que la surface de roulement incurvée (177) en forme d'arc est constituée par la face supérieure d'un support (175) formant traverse courbe et dont les faces supérieure et inférieure sont parallèles et en ce qu'un rouleau de retenue (184) est relié à la superstructure (8) parallèlement au rouleau de roulement support (178).

15. Véhicule automobile selon la revendication 1, caractérisé en ce que le dispositif de protection contre le cisaillement latéral est constitué d'un ensemble articulé (39) qui est relié au châssis (1, 2) par une articulation dont l'axe est parallèle à l'axe longitudinal du véhicule et qui est relié à la superstructure (8) par une deuxième articulation (38) dont l'axe est disposé parallèlement à l'axe de la première articulation (40), l'articulation (38) étant fixée, entre la barre d'articulation traversale (39) et la superstructure (8), à une console (37) fixée sur la superstructure (8) et étant disposée au voisinage de la surface de roulement incurvée (5) de façon telle que l'axe de l'articulation (38) entre le bras transversal (39) et la superstructure (8) décrit un arc de cercle autour de l'axe de l'articulation (40) reliée au châssis (1, 2) au cours du roulement de la surface de roulement (6) et sur la surface de roulement incurvée (5).

16. Véhicule automobile selon la revendication 15, caractérisé en ce que l'articulation (40) est placée dans le longeron d'un châssis de montage (3, 4) pour relier le châssis (1, 2) à la barre d'articulation transversale (39), une aile du châssis de montage étant reliée à l'aile supérieure d'un longeron du châssis (1,2).

17. Véhicule automobile selon la revendication 1, caractérisé en ce qu'une paire d'organes de traction (170) sert de liaison de protection contre le déplacement latéral, l'un de ces organes étant raccordé d'une part au côté gauche de la superstructure (8) et d'autre part directement ou non au longeron droit (2) du châssis, l'autre de ces organes étant raccordé au côté droit de la superstructure (8) et au longeron gauche (1) du châssis, tandis que l'organe de traction (170) repose sur une surface d'appui (169) qui est disposé à proximité du chemin de roulement incurvé (5) de telle façon que la fibre neutre de l'organe de traction (170) soit située entre le point de raccordement au châssis (1, 2) et le point de contact de la surface de roulement (5, 6) situés l'un et l'autre à proximité de la surface du chemin de roulement incurvé.

18. Véhicule automobile selon la revendication 1 ou de préférence selon la revendication 13, caractérisé en ce qu'il comporte un support (191, 192) rigidement fixé à la superstructure et qui peut pivoter autour d'un axe support (204) disposé sur un élément porteur transversal (193) et au moins sensiblement coaxial à l'axe de torsion (176).

19. Véhicule automobile selon la revendication 18, caractérisé en ce que l'axe de support (204) est disposé sur une suspente (199, 200) qui est suspendue à un élément porteur transversal (193) disposé transversalement au plan médian longitudinal du véhicule.

20. Véhicule automobile selon la revendication 19, caractérisé en ce que la suspente (199, 200) peut pivoter autour d'un axe perpendiculaire au plan médian longitudinal du véhicule.

21. Véhicule automobile selon la revendication 1, caractérisé en ce que la liaison disposée dans la zone intermédiaire de la superstructure (8), entre cette dernière et le châssis (1, 2) est réalisée sous la forme d'une liaison de protection contre le déplacement longitudinal se composant au moins de chaque côté deux pattes de liaison (24, 28) qui, chacune, sont reliées au châssis (1, 2) par une articulation pivotante dont l'axe est perpendiculaire au plan médian longitudinal du véhicule et sont reliées également à la superstructure (8) par une deuxième articulation pivotante dont l'axe est parallèle à l'axe de la première articulation pivotante, de telle sorte qu'en situation normale, les lignes de liaison théoriques qui passent chacune par les deux axes d'articulation d'une patte de liaison (24 et 28) se coupent au moins approximativement en un point qui du côté du cadre est situé à distance de toutes les attaches de liaison (24 et 28) et en ce que toutes les articulations pivotantes sont réalisées comme une articulation élastique permettant le transfert de forces par des déplacements d'amplitude limitée entre l'axe de pivotement et le composant correspondant.

15

22. Véhicule automobile selon la revendication 21, caractérisé en ce qu'il comporte un nombre impair de pattes de liaison (24, 25, 26, 27, 28, 29, 123, 124, 125, 134, 145, 143, 144, 146).

23. Véhicule automobile selon la revendication 21, caractérisé en ce que chaque articulation comporte un manchon en métal et en élastomère (149, 150, 151) qui sert de palier pour l'axe d'articulation.

24. Véhicule automobile selon la revendication 22, caractérisé en ce que tous les axes d'articulation pour les différentes pattes de liaison (24, 25, 26, 27, 28, 29) sur le châssis (1, 2) et le châssis de montage (3, 4) et/ou tous les axes de liaison sur la superstructure (8) sont disposés chacun au moins approximativement sur une ligne théorique droite parallèle à l'axe longitudinal du véhicule.

25. Véhicule automobile selon la revendication 21, caractérisé en ce que les pattes de liaison (123, 124, 125, 133, 134, 135, 143, 144, 145, 146) de la liaison de protection contre le déplacement longitudinal sont disposées de telle façon qu'en position normale, les lignes de liaison imaginaires, qui chacune traversent par les deux axes de liaison une patte de liaison (123, 124, 125, 133, 134, 135, 143, 144, 145, 146) se coupent au moins approximativement en un point, qui est situé à distance de toutes les pattes de liaison (123, 124, 125, 133, 134, 135, 143, 144, 145, 146) et en ce que toutes les articulations pivotantes sont réalisées comme des articulations de transmission de forces admettant des déplacements d'amplitude limitée entre l'axe de pivotement et le composant correspondant, chaque articulation comportant un manchon en métal et en élastomère (149, 150, 151) tandis que tous les axes de pivotement sur le châssis (1 et 130, 131) et/ou tous les axes de pivotement sur la superstructure (8) sont disposés chacun au moins approximativement sur une ligne droite imaginaire.

26. Véhicule automobile selon la revendication 25, caractérisé en ce que la zone ou le point d'intersection où toutes les lignes de liaison (129) coupent du côté du cadre les pattes de liaisons (123, 124, 125, 133, 134, 135, 143, 144, 145, 146) est situé au moins approximativement dans le plan de l'axe de torsion (176).

27. Véhicule automobile selon la revendication 25, caractérisé en ce qu'un organe de réception des forces verticales se composant de l'ensemble de pattes (123, 124, 125, 133, 134, 135, 143, 144, 145, 146) placées à distance dans la direction longitudinale du véhicule est disposée entre le châssis (1, 2) et la superstructure (8).

28. Véhicule automobile selon la revendication 25, caractérisé en ce que la liaison de protection contre le déplacement longitudinal (123, 124, 125, 133, 134, 135, 143, 144, 145, 146) est disposée sur le véhicule en un emplacement où l'on n'attend ou ne tolère que de faibles variations de la distance entre le châssis (1, 2) et la superstructure (8).

29. Véhicule automobile selon la revendication 1, caractérisé en ce que la liaison de protection contre le déplacement longitudinal dans la zone médiane entre le châssis (1, 2) et la superstructure (8) comporte deux supports (214) qui sont reliés rigidement à la superstructure (8, 83), et qui sont chacun reliés de façon pivotante au châssis par un pivot d'appui relié rigidement au châssis (12) du véhicule, les axes de pivotement des deux pivots d'appui (211) étant coaxiaux et coupant au moins approximativement l'axe de torsion.

30. Véhicule automobile selon l'une des revendications précédentes muni d'une tige transversale reliant les deux longerons du châssis de montage, caractérisé en ce qu'un support pivotant est monté sur la tige transversale (223, 219) et en ce que la liaison entre la tige transversale (213, 219) avec chacun des longerons (3 ou 4) du châssis de montage est réalisée sous forme rigide dans la direction verticale et sous forme souple dans la direction horizontale.

Fig 1

*Fig 2*

*Fig 4*

*Fig 3*

EP 0 214 990 B1

Fig 6

Fig 5

Fig 7

4

Fig 8

Fig 9

Fig 10

Fig 11

Fig 12

EP 0 214 990 B1

Fig. 13

EP 0 214 990 B1

Fig. 14

EP 0 214 990 B1

Fig. 15

Fig.16

Fig.17

*Fig. 18*

*Fig. 19*

Fig.21

Fig.20

EP 0 214 990 B1

Fig.22

Fig.23

Fig. 24

Fig.25

Fig.26

EP 0 214 990 B1

Fig. 29

Fig. 28

Fig. 27